# EUROPEAN PATENT APPLICATION

(11) **EP 4 513 908 A1**
(43) Date of publication of application: **26.02.2025**
(21) Application number: 23810884.9
(22) Date of filing: 15.05.2023
(51) Int. Cl.: H04W 4/06

(54) **MOBILITY MANAGEMENT METHOD AND APPARATUS**

(30) Priority: 24.05.2022 CN 202210574011
(71) Applicant: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN)
(74) Representative: Pfenning, Meinig & Partner mbB
(86) International application number: PCT/CN2023/094249
(87) International publication number: WO 2023/226811

(57) **Abstract**

A mobility management method and an apparatus can improve continuity of a multicast service of a terminal device. The method includes: A source access network device sends, to a target access network device, a first message for requesting to hand over a first multicast service of a first terminal device to a first target cell, and the target access network device sends a second message to the source access network device as a response to the first message, where the second message includes first information indicating a first candidate cell, and the first candidate cell is a cell that provides a multicast service for a terminal device in an RRC non-connected mode. After receiving the second message, the source access network device sends, to the first terminal device, third information indicating a second candidate cell. After receiving the third information, the first terminal device receives, in the RRC non-connected mode, a second multicast service provided by a second target cell in the second candidate cell. The second multicast service includes some or all services in the first multicast service. The second candidate cell may include some or all cells in the first candidate cell.

## Description

This application claims priority to Chinese Patent Application No. 202210574011.5, filed with the China National Intellectual Property Administration on May 24, 2022 and entitled "MOBILITY MANAGEMENT METHOD AND APPARATUS", which is incorporated herein by reference in its entirety.

### TECHNICAL FIELD

Embodiments of this application relate to the communication field, and in particular, to a mobility management method and an apparatus.

### BACKGROUND

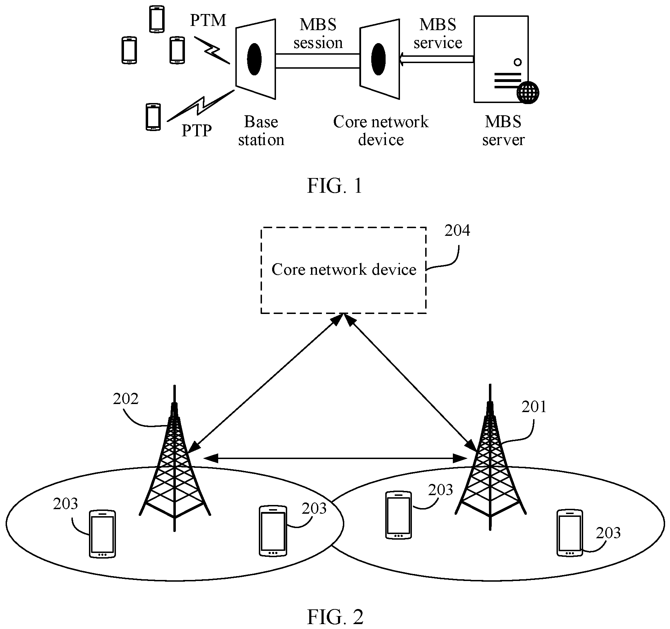

A multicast and broadcast service (multicast and broadcast service, MBS) is a service oriented to a plurality of terminal devices. From a perspective of an end-to-end management and control procedure, MBS services can be classified into a multicast service and a broadcast service. Common MBS services include a live broadcast service, a public security service, a batch software update service, and the like. As shown in FIG. 1, a transmission path of an MBS service may be: a data server (or referred to as an MBS server)→a core network device→a base station-a plurality of terminal devices.

When the core network device sends the MBS service to the base station, transmission of service data is performed by using an MBS session (session), and the MBS session includes at least one MBS quality of service (quality of service, QoS) flow. When the base station sends the MBS service to the terminal device, transmission of the service data is performed via an MBS radio bearer (MBS radio bearer, MRB). For one MRB, a point-to-multipoint (point-to-multipoint, PTM) or point-to-point (point-to-point, PTP) transmission mode may be used.

In a mobility scenario, if the terminal device receives a multicast service from a source base station, when the source base station requests to hand over the terminal device to a target base station, the multicast service of the terminal device may be interrupted due to a handover failure. Consequently, user experience deteriorates.

### SUMMARY

This application provides a mobility management method and an apparatus, to improve continuity of a multicast service of a terminal device. In this way, user experience is improved.

According to a first aspect, a mobility management method is provided. The method may be performed by a target access network device, or may be performed by a component of the target access network device, for example, a processor, a chip, or a chip system of the target access network device, or may be implemented by a logical module or software that can implement all or some functions of the target access network device. The method includes: receiving a first message, where the first message is for requesting to hand over a first multicast service of a first terminal device to a first target cell; and sending a second message, where the second message is a response message of the first message, the second message includes first information, the first information indicates a first candidate cell, and the first candidate cell is a cell that provides a multicast service for a terminal device in a radio resource control RRC non-connected mode.

Based on this solution, the target access network device receives the first message for requesting to hand over the first multicast service of the first terminal device to the first target cell, and may indicate the first candidate cell that provides the multicast service for the terminal device in the RRC non-connected mode, so that the source access network device can indicate, to the first terminal device, the cell that provides the multicast service for the terminal device in the RRC non-connected mode. In this way, the first terminal device can receive, in the RRC non-connected mode, the multicast service provided by the cell, service interruption caused by a failure of handover to the first target cell is reduced, and service continuity is improved, so that user experience is improved.

In a possible design, the first information indicates that the first candidate cell is the first target cell. Based on the possible design, when the first candidate cell is the first target cell, it indicates that the first target cell can provide the multicast service for the terminal device in the RRC non-connected mode. In this case, even if the first terminal device fails to be handed over to the first target cell, the first terminal device may receive, in the RRC non-connected mode, the multicast service provided by the first target cell, so that service interruption caused by the handover failure is reduced, and service continuity is improved.

In a possible design, the first information indicates an identifier of the first candidate cell.

In a possible design, the first information further indicates the multicast service provided by the first candidate cell for the terminal device in the RRC non-connected mode. Based on the possible design, the source access network device may determine a candidate cell that provides a service in the first multicast service for the terminal device in the RRC non-connected mode, to indicate the candidate cell to the first terminal device. In this way, the first terminal device receives, in the RRC non-connected mode, the service in the first multicast service provided by the candidate cell, so that continuity of some or all services in the first multicast service is improved.

In a possible design, the first information further indicates that the first candidate cell provides the first multicast service for the terminal device in the RRC non-connected mode. Based on the possible design, when the first candidate cell provides the first multicast service for the terminal device in the RRC non-connected mode, continuity of the first multicast service can be improved, so that user experience is improved.

In a possible design, the first message includes second information, and the second information indicates at least one of the following: a mode of a multicast and broadcast service MBS session of the first multicast service, an identifier of a protocol data unit PDU session associated with the MBS session of the first multicast service, or an identifier of a PDU session of the first terminal device. The mode of the MBS session of the first multicast service includes an active mode or a deactivated mode, and the PDU session of the first terminal device includes the PDU session associated with the MBS session of the first multicast service.

In a possible design, when a target condition is satisfied, the second message includes the first information. The target condition includes: The first candidate cell provides a second multicast service for the terminal device in the RRC non-connected mode, where the second multicast service includes some or all services in the first multicast service. Based on the possible design, when the first candidate cell provides the some or all services in the first multicast service for the terminal device in the RRC non-connected mode, continuity of the some or all services in the first multicast service can be improved, so that user experience is improved.

In a possible design, the some services in the first multicast service include: some or all services whose MBS sessions are in the active mode in the first multicast service. Based on the possible design, continuity of the some or all services whose MBS sessions are in the active mode in the first multicast service can be improved.

In a possible design, the target condition further includes: An MBS session of the second multicast service is associated with all PDU sessions of the first terminal device; or a QoS flow of an MBS session of the second multicast service is associated with all quality of service QoS flows of all PDU sessions of the first terminal device. Because the PDU session of the first terminal device may be established for a unicast service, based on the possible design, when all PDU sessions of the first terminal device are associated with the MBS session, it indicates that the first terminal device currently has no ongoing unicast service, or it indicates that the first terminal device has no unicast service that needs to be handed over. In this case, execution of the solutions of this application can reduce impact on the unicast service.

In a possible design, the multicast service provided by the first candidate cell for the terminal device in the RRC non-connected mode includes the some or all services in the first multicast service. Based on the possible design, continuity of the some or all services in the first multicast service can be improved, so that user experience is improved.

In a possible design, the first message is a handover request message, and the second message is a handover preparation failure message. Based on the possible design, the solutions of this application can be used in Xn-based handover, so that changes to a standard are reduced and applicability is improved.

According to a second aspect, a mobility management method is provided. The method may be performed by a source access network device, or may be performed by a component of the source access network device, for example, a processor, a chip, or a chip system of the source access network device, or may be implemented by a logical module or software that can implement all or some functions of the source access network device. The method includes: sending a first message, where the first message is for requesting to hand over a first multicast service of a first terminal device to a first target cell; receiving a second message, where the second message is a response message of the first message, the second message includes first information, the first information indicates a first candidate cell, and the first candidate cell is a cell that provides a multicast service for a terminal device in a radio resource control RRC non-connected mode; and sending third information to the first terminal device, where the third information indicates a second candidate cell, the second candidate cell is a cell that provides a second multicast service for the terminal device in the radio resource control RRC non-connected mode, and the second multicast service includes some or all services in the first multicast service.

According to this solution, when requesting to hand over the first multicast service of the first terminal device to the first target cell, the source access network device may receive the first candidate cell that is indicated by a target access network device and that provides the multicast service for the terminal device in the RRC non-connected mode, so that the source access network device can indicate the second candidate cell to the first terminal device. Because the second candidate cell includes some or all cells in the first candidate cell, the second candidate cell can also provide a multicast service for the terminal device in the RRC non-connected mode, so that the first terminal device can receive, in the RRC non-connected mode, the second multicast service provided by the second candidate cell. Because the second multicast service includes the some or all services in the first multicast service, interruption of the some or all services in the first multicast service caused by a failure of handover to the first target cell can be reduced, and service continuity can be improved, so that user experience can be improved.

In a possible design, the second candidate cell includes the some or all cells in the first candidate cell.

In a possible design, the first information indicates that the first candidate cell is the first target cell.

In a possible design, the first information indicates an identifier of the first candidate cell.

In a possible design, the first information further indicates the multicast service provided by the first candidate cell for the terminal device in the RRC non-connected mode.

In a possible design, the first information further indicates that the first candidate cell provides the first multicast service for the terminal device in the RRC non-connected mode.

For technical effects brought by any possible design provided in the second aspect, refer to technical effects brought by corresponding designs of the first aspect. Details are not described herein.

According to a third aspect, a mobility management method is provided. The method may be performed by a first terminal device, or may be performed by a component of the first terminal device, for example, a processor, a chip, or a chip system of the first terminal device, or may be implemented by a logical module or software that can implement all or some functions of the first terminal device. The method includes: receiving third information from a source access network device, where the third information indicates a second candidate cell, and the second candidate cell is a cell that provides a second multicast service for a terminal device in a radio resource control RRC non-connected mode; and receiving, in the RRC non-connected mode, the second multicast service provided by a second target cell, where the second target cell is one of second candidate cells.

Based on this solution, the first terminal device can receive, in the RRC non-connected mode, the second multicast service provided by the second target cell. If the first terminal device receives, in the RRC non-connected mode after a handover preparation fails, the second multicast service provided by the second target cell, when the second multicast service includes a service received by the first terminal device in an RRC connected mode before handover, continuity of the service can be improved. If the first terminal device receives, in the RRC non-connected mode after handover succeeds, the second multicast service provided by the second target cell, when the second multicast service includes a service received by the first terminal device in an RRC connected mode before the handover, continuity of the service is improved, and load of the second target cell can also be reduced because the first terminal device does not access the second target cell.

In a possible design, before receiving, in the RRC non-connected mode, the second multicast service provided by a second target cell, the method further includes: selecting the second target cell when performing cell selection based on the second candidate cell; and camping on the second target cell.

Based on the possible design, the first terminal device can camp on, during cell selection, a cell that provides a multicast service for the terminal device in the RRC non-connected mode, so that the first terminal device receives, as early as possible, the multicast service provided by the second target cell, and continuity of the multicast service is improved. In this way, user experience is improved.

In a possible design, the second multicast service includes some or all services in a first multicast service, and the first multicast service is a to-be-handed-over service received by the first terminal device in the source access network device. When the first terminal device receives the first multicast service in the source access network device before handover, based on the possible design, continuity of the some or all services in the first multicast service can be improved.

In a possible design, the second target cell satisfies at least one of the following:
The second target cell is a cell that is in the second candidate cell and that provides all services in the first multicast service for the terminal device in the RRC non-connected mode, where based on the possible design, continuity of all services in the first multicast service can be improved, and user experience can be greatly improved;
the second target cell is a cell that is in the second candidate cell and that provides a largest quantity of services in the first multicast service for the terminal device in the RRC non-connected mode, where based on the possible design, continuity of as many services as possible in the first multicast service can be improved;
the second target cell is a cell that is in the second candidate cell and that provides a third multicast service for the terminal device in the RRC non-connected mode, where the third multicast service is a service with a highest priority in the first multicast service, and based on the possible design, continuity of the service with the highest priority in the first multicast service can be improved; or
the second target cell is a cell that is in the second candidate cell and that provides a largest quantity of third multicast services for the terminal device in the RRC non-connected mode, where based on the possible design, continuity of the service with the highest priority in the first multicast service can be improved.

According to a fourth aspect, a communication apparatus is provided, configured to implement various methods. The communication apparatus may be the target access network device in the first aspect, or an apparatus included in the target access network device, for example, a chip or a chip system; or the communication apparatus may be the source access network device in the second aspect, or an apparatus included in the source access network device, for example, a chip or a chip system; or the communication apparatus may be the first terminal device in the third aspect, or an apparatus included in the first terminal device, for example, a chip or a chip system. When the apparatus is the chip system, the apparatus may include a chip, or may include a chip and another discrete component.

The communication apparatus includes a corresponding module, unit, or means (means) for implementing the method. The module, unit, or means may be implemented by hardware, software, or hardware executing corresponding software. The hardware or the software includes one or more modules or units corresponding to the function.

In some possible designs, the communication apparatus may include a processing module and a transceiver module. The processing module may be configured to implement a processing function in any one of the foregoing aspects and any one of the possible implementations of the foregoing aspects. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and any one of the possible implementations of the foregoing aspects.

In a possible design, when the communication apparatus is the target access network device in the first aspect or the apparatus included in the target access network device:
The transceiver module is configured to receive a first message, where the first message is for requesting to hand over a first multicast service of a first terminal device to a first target cell; and
the transceiver module is further configured to send a second message, where the second message is a response message of the first message, the second message includes first information, the first information indicates a first candidate cell, and the first candidate cell is a cell that provides a multicast service for a terminal device in a radio resource control RRC non-connected mode.

Further, the processing module is configured to generate the second message.

Further, the processing module is configured to determine that when a target condition is satisfied, the second message includes the first information; and the target condition includes: The first candidate cell provides a second multicast service for the terminal device in the RRC non-connected mode, where the second multicast service includes some or all services in the first multicast service.

In a possible design, when the communication apparatus is the source access network device in the second aspect or the apparatus included in the source access network device:
The transceiver module is configured to send a first message, where the first message is for requesting to hand over a first multicast service of a first terminal device to a first target cell;
the transceiver module is further configured to receive a second message, where the second message is a response message of the first message, the second message includes first information, the first information indicates a first candidate cell, and the first candidate cell is a cell that provides a multicast service for a terminal device in a radio resource control RRC non-connected mode; and
the transceiver module is further configured to send third information to the first terminal device, where the third information indicates a second candidate cell, the second candidate cell is a cell that provides a second multicast service for the terminal device in the radio resource control RRC non-connected mode, and the second multicast service includes some or all services in the first multicast service.

Further, the processing module is configured to generate the first message.

In a possible design, when the communication apparatus is the first terminal device in the third aspect or the apparatus included in the first terminal device:
The transceiver module is configured to receive third information from a source access network device, where the third information indicates a second candidate cell, and the second candidate cell is a cell that provides a second multicast service for a terminal device in a radio resource control RRC non-connected mode; and
the transceiver module is further configured to receive, in the RRC non-connected mode, the second multicast service provided by a second target cell, where the second target cell is one of second candidate cells.

Further, the processing module is configured to select the second target cell when cell selection is performed based on the second candidate cell; and the processing module is further configured to control the first terminal device to camp on the second target cell.

According to a fifth aspect, a communication apparatus is provided, including a processor and a communication interface, where the communication interface is configured to communicate with a module outside the communication apparatus; and the processor is configured to execute a computer program or instructions, to enable the communication apparatus to perform the method according to any one of the foregoing aspects. The communication apparatus may be the target access network device in the first aspect, or an apparatus included in the target access network device, for example, a chip or a chip system; or the communication apparatus may be the source access network device in the second aspect, or an apparatus included in the source access network device, for example, a chip or a chip system; or the communication apparatus may be the first terminal device in the third aspect, or an apparatus included in the first terminal device, for example, a chip or a chip system. When the apparatus is the chip system, the apparatus may include a chip, or may include a chip and another discrete component.

According to a sixth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or the memory may exist independently of the processor. For example, the memory and the processor are two independent modules. The memory may be located outside or inside the communication apparatus.

The communication apparatus may be the target access network device in the first aspect, or an apparatus included in the target access network device, for example, a chip or a chip system; or the communication apparatus may be the source access network device in the second aspect, or an apparatus included in the source access network device, for example, a chip or a chip system; or the communication apparatus may be the first terminal device in the third aspect, or an apparatus included in the first terminal device, for example, a chip or a chip system. When the apparatus is the chip system, the apparatus may include a chip, or may include a chip and another discrete component.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the foregoing aspects.

According to an eighth aspect, a computer program product including instructions is provided. When the computer program product runs on a communication apparatus, the communication apparatus is enabled to perform the method according to any one of the foregoing aspects.

It may be understood that when the communication apparatus provided in any one of the fourth aspect to the eighth aspect is a chip, the sending action/function of the communication apparatus may be understood as outputting information, and the receiving action/function of the communication apparatus may be understood as inputting information.

For technical effects brought by any design manner in the fourth aspect to the eighth aspect, refer to technical effects brought by different design manners in the first aspect, the second aspect, or the third aspect. Details are not described herein again.

### BRIEF DESCRIPTION OF DRAWINGS

FIG. 1 is a diagram of a transmission path of an MBS service according to this application;
FIG. 2 is a diagram of a structure of a communication system according to this application;
FIG. 3 is a diagram of a structure of a communication apparatus according to this application;
FIG. 4 is a diagram of a transmission mode of a multicast service according to this application;
FIG. 5 is a schematic flowchart of receiving a broadcast service according to this application;
FIG. 6 is a diagram of a transmission mode of a broadcast service according to this application;
FIG. 7 is a diagram of a structure of a user plane protocol stack according to this application;
FIG. 8 is a diagram of a structure of an MRB according to this application;
FIG. 9 is a schematic flowchart of a handover preparation failure according to this application;
FIG. 10 is a schematic flowchart of a mobility management method according to this application;
FIG. 11 is a schematic flowchart of another mobility management method according to this application;
FIG. 12 is a schematic flowchart of still another mobility management method according to this application;
FIG. 13 is a diagram of a structure of a target access network device according to this application;
FIG. 14 is a diagram of a structure of a source access network device according to this application;
FIG. 15 is a diagram of a structure of a first terminal device according to this application; and
FIG. 16 is a diagram of a structure of another communication apparatus according to this application.

### DESCRIPTION OF EMBODIMENTS

In the descriptions of this application, unless otherwise specified, "/" indicates that associated objects are in an "or" relationship. For example, A/B may represent A or B. In this application, "and/or" merely describes an association relationship between associated objects and indicates that three relationships may exist. For example, A and/or B may represent three cases: Only A exists, both A and B exist, or only B exists, where A and B may be singular or plural.

In the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, reference may be made to each other. In embodiments of this application, unless otherwise specified or a logical conflict occurs, terms and/or descriptions in different embodiments are consistent and may be referenced by each other, and different embodiments may be combined based on internal logical relationships between embodiments to form a new embodiment. The following implementations of this application are not intended to limit the protection scope of this application.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle to everything (vehicle to everything, V2X) system, an LTE and NR hybrid networking system, a device-to-device (device-to-device, D2D) system, a machine to machine (machine to machine, M2M) communication system, an internet of things (Internet of Things, IoT), or another next-generation communication system. Alternatively, the communication system may be a non-3GPP communication system. This is not limited.

The communication system applicable to this application is merely an example for description, and the communication system applicable to this application is not limited thereto. This is uniformly described herein, and details are not described below again.

FIG. 2 shows an example of a communication system according to this application. The communication system includes a target access network device 201, a source access network device 202, and at least one terminal device 203. Optionally, the communication system may further include a core network device 204.

Optionally, the at least one terminal device 203 includes a first terminal device. In this application, an example in which the first terminal device first establishes a connection to the source access network device 202 is used. Subsequently, the source access network device 202 may request to hand over the first terminal device to the target access network device 201. For example, the handover may be Xn-based handover, or may be NG-based handover, or may be conditional handover (conditional handover, CHO) or dual active protocol stack (dual active protocol stack, DAPS) handover. The dual active protocol stack handover may also be referred to as zero-millisecond handover. The first terminal device may be a terminal device located at an edge of a cell of the source access network device 202.

Optionally, the access network device (the source access network device 202 or the target access network device 201) is a device for connecting a terminal device to a wireless network, and may be an evolved NodeB (evolved NodeB, eNB or eNodeB) in an LTE system or an evolved LTE system (LTE-Advanced, LTE-A), for example, may be a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved public land mobile network (public land mobile network, PLMN); or may be a broadband network gateway (broadband network gateway, BNG), a aggregation switch, or a non-3GPP access device; or may be a radio controller in a cloud radio access network (cloud radio access network, CRAN); or may be an access point (access point, AP) in a Wi-Fi system; or may be a wireless relay node or a wireless backhaul node; or may be a device for implementing a base station function in an IoT, a device for implementing a base station function in V2X, a device for implementing a base station function in D2D, or a device for implementing a base station function in M2M. This is not specifically limited in embodiments of this application.

For example, the base station in embodiments of this application may include base stations in various forms, for example, a macro base station, a micro base station (also referred to as a small cell), a relay station, and an access point. This is not specifically limited in embodiments of this application.

Optionally, during specific implementation, the access network device 202 may be a central unit (central unit, CU) or a distributed unit (distributed unit, DU), or the access network device may include a CU and a DU. The CU and the DU may be divided based on a protocol layer of a wireless network. For example, functions of a radio resource control (radio resource control, RRC) protocol layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a media access control (media access control, MAC) layer, and a physical (physical, PHY) layer are set in the DU.

It may be understood that, division into processing functions of the CU and the DU based on the protocol layers is merely an example, and division may alternatively be performed in another manner. This is not specifically limited in this application.

In some embodiments, the CU may include a CU control plane (CU control plane, CU-CP) and a CU user plane (CU user plane, CU-UP).

Optionally, the terminal device 203 may be a device having a wireless transceiver function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be, for example, a wireless terminal in an IoT, V2X, D2D, M2M, a 5G network, or a future evolved PLMN. The terminal device 203 may be deployed on land, where the deployment includes indoor or outdoor, or handheld or vehicle-mounted deployment, may be deployed on water (for example, on a ship), or may be deployed in air (for example, on an airplane, a balloon, or a satellite).

For example, the terminal device 203 may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable intelligent device), a tablet computer, a computer having a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, or an uncrewed aerial vehicle having an uncrewed aerial vehicle (uncrewed aerial vehicle, UAV) to uncrewed aerial vehicle (UAV to UAV, U2U) communication capability. The terminal may be mobile or fixed. This is not specifically limited in this application.

Optionally, the core network device 204 is mainly responsible for access authentication, mobility management, and the like of the terminal device, for example, managing a registration status of a user, a connection status of a user, user registration and network access, tracking area update, cell handover user authentication, and key security. For example, in a 5G communication system, the core network device 204 may be an access and mobility management function (access and mobility management function, AMF) network element.

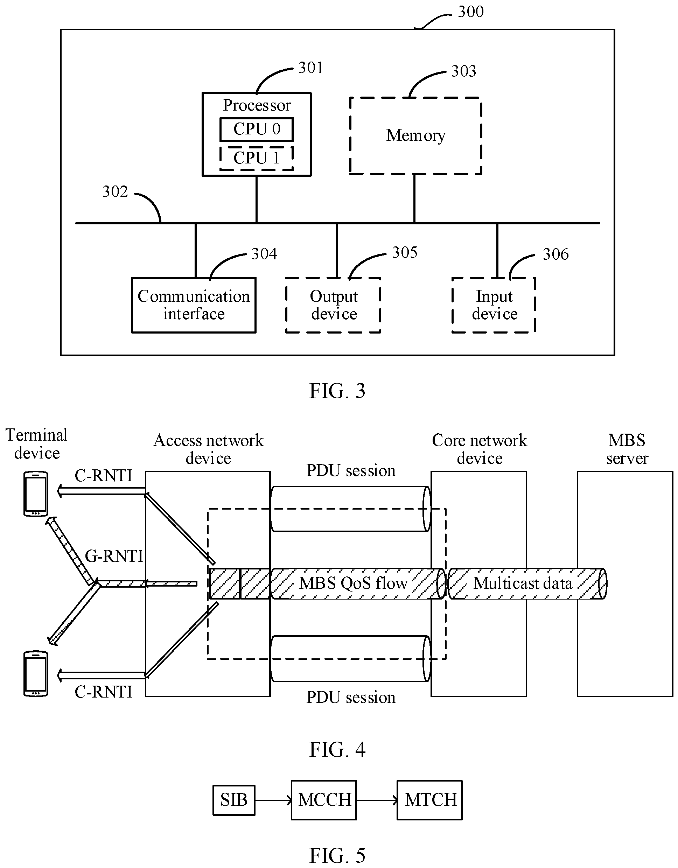

Optionally, during specific implementation, the terminal device, the access network device, or the core network device shown in FIG. 2 may use a composition structure shown in FIG. 3, or include a component shown in FIG. 3. FIG. 3 is a composition diagram of a communication apparatus 300 according to this application. The communication apparatus 300 may be a terminal device, or a chip or a system on chip in the terminal device; or may be an access network device, or a module, a chip, or a system on chip in the access network device; or may be a core network device, or a module, a chip, or a system on chip in the core network device.

As shown in FIG. 3, the communication apparatus 300 includes at least one processor 301 and at least one communication interface (FIG. 3 is merely an example in which one communication interface 304 and one processor 301 are included for description). Optionally, the communication apparatus 300 may further include a communication bus 302 and a memory 303.

The processor 301 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

The communication bus 302 is configured to connect different components in the communication apparatus 300, so that the different components can communicate with each other. The communication bus 302 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 3, but this does not indicate that there is only one bus or only one type of bus.

The communication interface 304 is configured to communicate with another device or a communication network. For example, the communication interface 304 may be a module, a circuit, a transceiver, or any apparatus that can implement communication. Optionally, the communication interface 304 may alternatively be an input/output interface located in the processor 301, and is configured to implement signal input and signal output of the processor.

The memory 303 may be an apparatus having a storage function, and is configured to store instructions and/or data, where the instructions may be a computer program.

For example, the memory 303 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 303 may be independent of the processor 301, or may be integrated with the processor 301. The memory 303 may be located inside the communication apparatus 300, or may be located outside the communication apparatus 300. This is not limited. The processor 301 may be configured to execute the instructions stored in the memory 303, to implement a method provided in the following embodiment of this application.

In an optional implementation, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensor device.

It should be noted that the structure shown in FIG. 3 does not constitute a specific limitation on the access network device, the core network device, or the terminal device. For example, in some other embodiments of this application, the access network device, the core network device, or the terminal device may include more or fewer components than those shown in the figure, or some components may be combined, or some components may be split, or different component arrangements may be used. The components shown in the figure may be implemented by hardware, software, or a combination of software and hardware.

For ease of understanding the technical solutions in embodiments of this application, technologies related to this application are first briefly described as follows.

### 1. Multicast and broadcast service (multicast and broadcast service, MBS):

The MBS service is a service oriented to a plurality of terminal devices. MBS services can be classified into a multicast service and a broadcast service in terms of an end-to-end management and control procedure and a transmission mode.

It should be noted that in this application, multicast may also be referred to as multicast, and correspondingly, the multicast service may also be referred to as a multicast service, and the multicast service and the multicast service may be replaced with each other.

### 1a. Multicast service (multicast service):

A quality of service (quality of service, QoS) requirement of the multicast service is usually high, and a QoS level of the multicast service can reach a level same as that of a unicast service. Usually, operations such as group management may be performed on the multicast service. For example, a core network device may manage a terminal device to join or leave a multicast service group, and an access network device and the core network device may maintain information about the terminal device in the multicast service group.

As shown in FIG. 4, transmission of a multicast service is performed between the core network device and the access network device by using an MBS session, and the MBS session includes an MBS QoS flow (or referred to as a multicast QoS flow (multicast QoS flow)). The MBS session may be associated with a PDU session of the terminal device, and the MBS QoS flow is associated with a unicast QoS flow in the PDU session. The core network device may control a mode of the MBS session to be an active mode or a deactivated mode, and the terminal device is unaware of the mode of the MBS session.

When sending the multicast service to the terminal device, the access network device may use a point-to-multipoint (point-to-multipoint, PTM) or point-to-point (point-to-point, PTP) transmission mode. In the PTM mode, data of the multicast service may be scrambled by using a group radio network temporary identifier (group radio network temporary identifier, G-RNTI). In the PTP mode, data of the multicast service is scrambled by using a cell radio network temporary identifier (cell radio network temporary identifier, C-RNTI). In addition, the access network device can control dynamic switching of the transmission mode between PTM and PTP.

Usually, the multicast service is provided only for a terminal device in an RRC connected mode.

### 1b. Broadcast service (broadcast service):

In comparison with the multicast service, the broadcast service has a lower QoS requirement, and QoS of the broadcast service belongs to best effort QoS (best effort QoS). The core network device and the access network device do not need to maintain a terminal device group that receives the broadcast service. When a network provides a broadcast service, the terminal device autonomously receives the broadcast service based on configuration information.

In addition, when the access network device sends a broadcast service to the terminal device, only the PTM transmission mode is supported. The broadcast service may be provided for a terminal device in any RRC mode.

For the broadcast service, two logical channels are introduced into an NR system: an MBS control channel (MBS control channel, MCCH) and an MBS traffic channel (MBS traffic channel, MTCH).

The MCCH is for transmission of control information. The control information may include configuration information of the MTCH, for example, a G-RNTI corresponding to the MTCH, a discontinuous reception (discontinuous reception, DRX) parameter, a temporary multicast group identifier (temporary multicast group identifier, TMGI), and a physical downlink shared channel (physical downlink shared channel, PDSCH) configuration corresponding to the MTCH. The MTCH is for transmission of data of the broadcast service, and is scheduled by a physical downlink control channel (physical downlink control channel, PDCCH) scrambled by using the G-RNTI.

The MTCH is configured per (per) G-RNTI. Each G-RNTI may be associated with at least one broadcast service. When each G-RNTI is associated with one broadcast service, it may also be considered that the MTCH is configured per MBS service (per MBS service).

MCCH transmission is performed periodically, and configuration information of the MCCH is carried in a system information block (system information block, SIB), for example, a SIB 20. For example, the configuration information of the MCCH may include: a repetition period (repetition period, RP), an mcch-offset (mcch-Offset), mcch-duration (mcch-duration), a modification period (modification period, MP), and the like of the MCCH.

In conclusion, a procedure in which the terminal device receives the broadcast service may be shown in FIG. 5. Refer to FIG. 5. A terminal device first receives a SIB, and obtains configuration information of an MCCH from the SIB. Then, the MCCH is received based on the configuration information of the MCCH, and message content of the MCCH is read, to obtain configuration information of an MTCH carried on the MCCH. Finally, data of a broadcast service is received on the MTCH based on the configuration information of the MTCH.

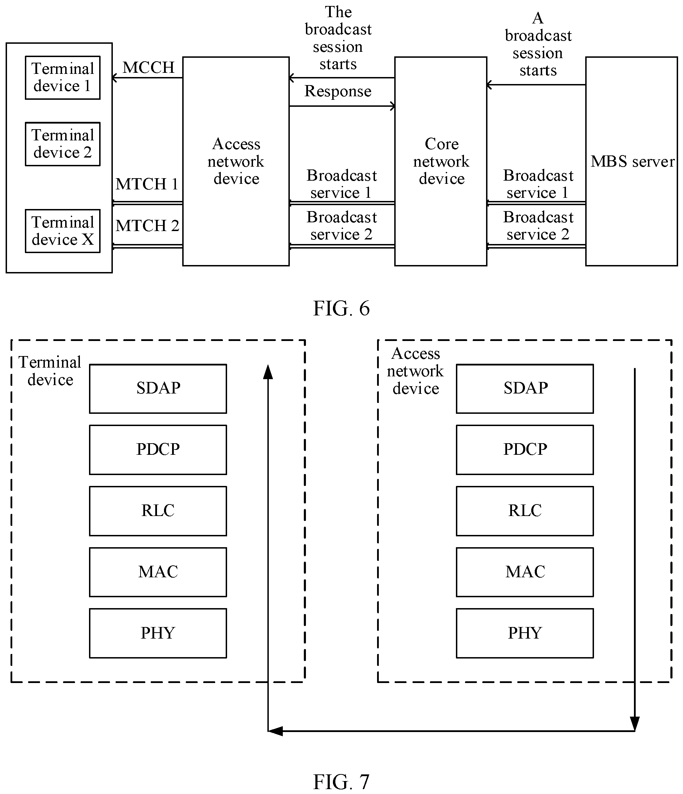

For example, FIG. 6 shows a process of transmitting a broadcast service from an MBS server to a terminal device. Before transmitting the service, the MBS server may send information to a core network device to indicate that a broadcast session starts. Correspondingly, the core network device indicates, to an access network device, that the broadcast session starts. After receiving the indication, the access network device sends a response to the core network device, and sends configuration information of an MTCH through an MCCH. Subsequently, data of a broadcast service 1 and data of a broadcast service 2 are sent from the MBS server to the core network device, and then sent from the core network device to the access network device. The access network device sends the data of the broadcast service 1 and the data of the broadcast service 2 to the terminal device through an MTCH 1 and an MTCH 2 respectively.

It should be noted that the foregoing descriptions of broadcast service transmission are merely examples. The broadcast service transmission is not specifically limited in this application, and the foregoing descriptions of the broadcast service do not constitute any limitation on this application either.

### 2. Protocol stack on a radio access network side:

The protocol stack on the radio access network side may be classified into a user plane protocol stack and a control plane protocol stack. The user plane protocol stack may include an SDAP layer, a PDCP layer, an RLC layer, a MAC layer, a physical (physical, PHY) layer, and the like. The physical layer belongs to a first layer (also referred to as a layer 1 (layer 1, L1)), and the MAC layer, the RLC layer, the PDCP layer, and the SDAP layer belong to a second layer (also referred to as a layer 2 (layer 2, L2)). In addition, a radio resource control (radio resource control, RRC) layer of a control plane belongs to a third layer (also referred to as a layer 3 (layer 3, L3)).

As shown in FIG. 7, in a user plane protocol stack of an MBS, an SDAP layer is located above a PDCP layer, the PDCP layer is located above an RLC layer, the RLC layer is located above a MAC layer, and the MAC layer is located above a physical layer. For the MBS service, after data arrives at an access network device, a data packet is processed at protocol layers sequentially in a top-down order shown in FIG. 7, and the data packet is finally transmitted to a terminal device through an air interface. After the terminal device receives the data packet on the air interface, corresponding processing is sequentially performed on the data packet in an order reverse to that of the access network device. Processing performed at each protocol layer on the data packet is implemented by a multi-function entity corresponding to the protocol layer. For example, processing performed at the PDCP layer is implemented by a corresponding PDCP layer entity.

Usually, a service that is provided by the layer 2 and that is for transmission of user data between a terminal device and an access network device may be referred to as a radio bearer (radio bearer, RB). For the MBS service, a service that is provided by the layer 2 and that is for transmission of user data between a terminal device and an access network device may be referred to as an MRB. For example, the service for transmission of the user data between the terminal device and the access network device may be implemented by the foregoing protocol layers that belong to the layer 2.

It should be noted that the user plane protocol stack shown in FIG. 7 constitutes no limitation on the solutions of this application. During actual application, the user plane protocol stack may include more or fewer protocol layers than those shown in the figure, or some protocol layers shown in FIG. 7 may be combined.

In a possible implementation, the MRB may be classified into an unacknowledged mode (unacknowledged mode, UM) MRB and an acknowledged mode (acknowledged mode, AM) MRB. When an MRB includes an AM RLC entity, the MRB is the AM MRB; and when an MRB does not include an AM RLC entity, the MRB is the UM MRB.

In addition, an RLC entity may be classified into a PTM RLC entity and a PTP RLC entity. The PTP RLC entity supports a UM mode or an AM mode. When the UM mode is supported, the PTP RLC entity is a UM RLC entity. When the AM mode is supported, the PTP RLC entity is an AM RLC entity. The PTM RLC entity supports the UM mode. In other words, the PTM RLC entity may be a UM RLC entity.

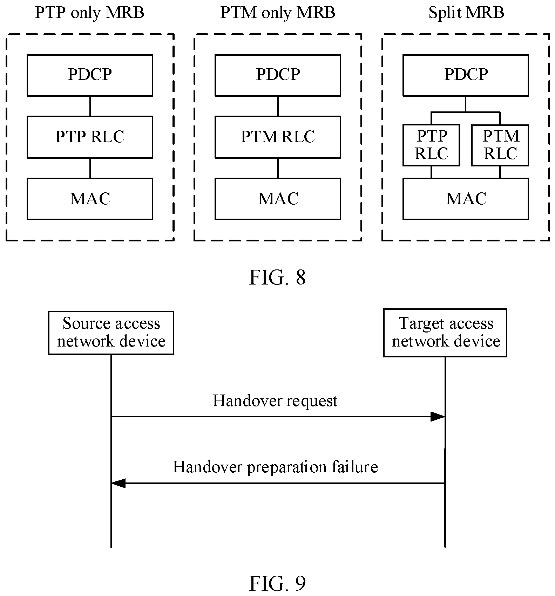

In another possible implementation, the MRB may be classified into a PTP only MRB, a PTM only MRB, and a split (split) MRB. For example, as shown in FIG. 8, the PTP only MRB includes PTP RLC, the PTM only MRB includes PTM RLC, and the split MRB includes PTP RLC and PTM RLC.

### 3. Xn-based handover and NG-based handover:

An Xn interface is an interface between access network devices. When there is the Xn interface or an Xn connection between the access network devices, the Xn-based handover may be used. In the Xn-based handover, a source access network device and a target access network device may perform communication in a handover procedure through the Xn interface.

The NG-based handover is applicable to a scenario in which there is no Xn interface or there is no Xn connection between the access network devices. In the NG-based handover, the source access network device and the target access network device perform communication in a handover procedure via a core network device (for example, an AMF network element).

Usually, the handover is initiated by the source access network device. For example, in the Xn-based handover, the source access network device may send a handover request (Handover Request) message to at least one target access network device through the Xn interface. In the NG-based handover, the source access network device may send a handover required (Handover Required) message to at least one AMF network element, and after receiving the handover required message, the at least one AMF network element may send a handover request to at least one target access network device.

After receiving the handover request, if the target access network device cannot accept the handover request, for example, the target access network device cannot receive any PDU session, or a resource (for example, an air interface resource, an access resource, or an internal hardware resource of the target access network device) is insufficient, or a specification is limited (for example, the target access network device does not support a terminal device of a current version, or does not support a multicast service), or a compatibility problem exists, or a failure occurs in a handover preparation process, the target access network device may reply with a handover failure. For example, the Xn-based handover is used as an example. As shown in FIG. 9, after the source access network device sends a handover request message to the target access network device, the target access network device may return a handover preparation failure (Handover Preparation Failure) message to the source access network device, to notify the source access network device that the handover fails. The handover preparation failure message may include a cause value of a handover failure.

If all target access network devices requested by the source access network device reply with a handover failure, a radio link failure (radio link failure, RLF) may occur, and the terminal device enters an RRC idle (RRC idle) mode. In this case, a multicast service received by the terminal device in the source access network device is interrupted, and user experience deteriorates.

In view of this, this application provides a mobility management method, to improve continuity of the multicast service of the terminal device and improve user experience in a handover scenario.

With reference to the accompanying drawings, the following describes in detail the method provided in embodiments of this application by using interaction between the target access network device, the source access network device, the core network device, and the terminal device shown in FIG. 2 as an example.

It may be understood that in embodiments of this application, an execution body may perform some or all of the steps in embodiments of this application. The steps or operations are merely examples. Embodiments of this application may further include performing other operations or variations of various operations. In addition, the steps may be performed in a sequence different from a sequence presented in embodiments of this application, and not all operations in embodiments of this application need to be performed.

It should be noted that names of messages between devices, names of parameters in the messages, or the like in the following embodiments of this application are merely examples, and there may be other names during specific implementation. This is not specifically limited in embodiments of this application.

For example, the method provided in the following embodiment of this application may be applied to a multicast service handover scenario. It is clear that only an example of an application scenario of this application is described herein. The application scenario imposes no limitation on this application, and an application scenario of the method provided below is not specifically limited in this application either.

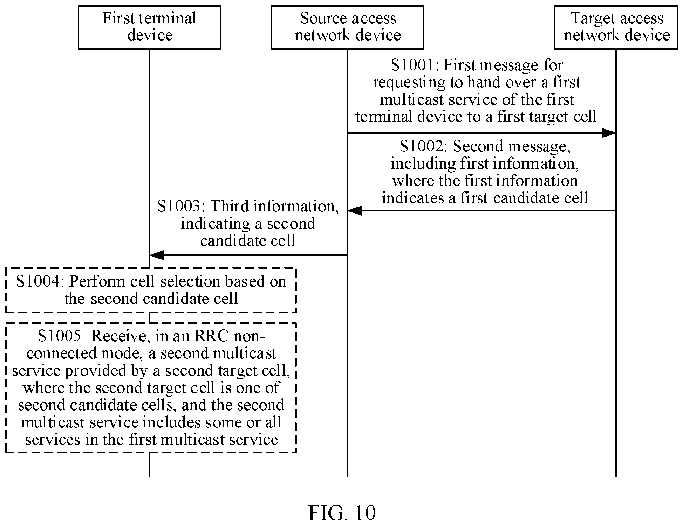

FIG. 10 shows a mobility management method according to an embodiment of this application by using Xn-based handover as an example. The mobility management method includes the following steps.

S1001: A source access network device sends a first message to a target access network device. Correspondingly, the target access network device receives the first message from the source access network device.

The first message is for requesting to hand over a first multicast service of a first terminal device to a first target cell. For example, the first multicast service may include one or more multicast services. The first target cell is a cell managed by the target access network device. In other words, the target access network device is an access network device to which the first target cell belongs.

Optionally, the first message may include at least one of identification information of the first terminal device, an identifier of the first multicast service, or an identifier of the first target cell. The identifier of the first target cell may indicate to hand over to the first target cell, and the identification information of the first terminal device and the identifier of the first multicast service may indicate to hand over the first multicast service of the first terminal device. In other words, the first multicast service may be understood as a to-be-handed-over service received by the first terminal device in the source access network device.

Optionally, before step S1001, the first terminal device may report measurement information to the source access network device. The measurement information may include reference signal received power (reference signal received power, RSRP) of one or more cells. After receiving the measurement information, the source access network device may select at least one target cell from the one or more cells based on the measurement information, and send, to an access network device to which each target cell belongs, a message for requesting handover. This application is described by using an example in which the first target cell is one of the at least one target cell selected by the source access network device. Correspondingly, the message for requesting handover sent by the source access network device to the access network device to which the first target cell belongs is the first message.

It may be understood that the solutions provided in this embodiment of this application are applicable to each target cell selected by the source access network device. For another target cell in the at least one target cell, the source access network device may perform an action similar to that performed for the first target cell. An access network device to which the another target cell belongs may perform an action performed by the target access network device in this application, or may implement a function implemented by the target access network device in this application.

Optionally, the first message may be a handover request (Handover Request) message. It is clear that the first message may alternatively be another message. This is not specifically limited in this application.

S1002: The target access network device sends a second message to the source access network device. Correspondingly, the source access network device receives the second message from the target access network device.

The second message is a response message of the first message. The second message includes first information, and the first information indicates a first candidate cell. For example, the first candidate cell includes one or more cells managed by the target access network device.

The first candidate cell is: a cell that provides a multicast service for a terminal device in an RRC non-connected mode, or a cell that can provide a multicast service for a terminal device in an RRC non-connected mode, or a cell that supports providing a multicast service for a terminal device in an RRC non-connected mode, or a cell that is providing a multicast service for a terminal device in an RRC non-connected mode, or a cell that provides a multicast service in a non-connected mode. The multicast service in the non-connected mode may be understood as a multicast service that can be received by the terminal device in the RRC non-connected mode.

For example, the RRC non-connected mode may be a mode that does not belong to an RRC active (active) mode, such as an RRC idle (idle) mode or an RRC inactive (inactive) mode.

Optionally, the multicast service provided by the first candidate cell for the terminal device in the RRC non-connected mode includes some or all services in the first multicast service. For example, assuming that the first multicast service includes a multicast service 1 and a multicast service 2, multicast services provided by the first candidate cell for the terminal device in the RRC non-connected mode may include the multicast service 1 and/or the multicast service 2. It is clear that the multicast services provided by the first candidate cell for the terminal device in the RRC non-connected mode may further include a multicast service other than the first multicast service.

Optionally, when the first candidate cell includes a plurality of cells, services in multicast services provided by different cells for the terminal device in the RRC non-connected mode may be the same or may be different. This is not specifically limited in this application. For example, assuming that the first candidate cell includes a cell 1, a cell 2, a cell 3, and a cell 4, multicast services provided by the four cells for the terminal device in the RRC non-connected mode may be shown in the following Table 1.

**Table 1**

| Cell | Multicast services provided for the terminal device in the RRC non-connected mode |
|---|---|
| Cell 1 | Multicast service 1 and multicast service 3 |
| Cell 2 | Multicast service 2 and multicast service 3 |
| Cell 3 | Multicast service 1, multicast service 2, and multicast service 4 |
| Cell 4 | Multicast service 3 and multicast service 4 |

The multicast service 1 and the multicast service 2 are services included in the first multicast service, and the multicast service 3 and the multicast service 4 are multicast services other than the first multicast service that are provided by the first candidate cell for the terminal device in the RRC non-connected mode.

In a possible implementation, the second message may indicate a handover preparation failure. For example, the second message may be a handover preparation failure (Handover Preparation Failure) message. After the target access network device receives the first message, if the target access network device cannot accept a handover request of the source access network device due to one or more reasons of high load, cell congestion, an insufficient resource, a limited specification, a compatibility problem, and the like of the first target cell, the second message may indicate the handover preparation failure. For descriptions of the insufficient resource and limited specification, refer to the foregoing related descriptions. Details are not described herein again.

In another possible implementation, the second message may indicate a handover preparation success. After the target access network device receives the first message, if the target access network device can accept a handover request of the source access network device, the second message may indicate the handover preparation success. After receiving the first message, the target access network device may accept the handover request of the source access network device when load of the first target cell is low or a resource of the first target cell is sufficient.

S1003: The source access network device sends third information to the first terminal device. Correspondingly, the first terminal device receives the third information from the source access network device.

The third information indicates a second candidate cell. The second candidate cell is: a cell that provides a second multicast service for the terminal device in the RRC non-connected mode, or a cell that can provide a second multicast service for the terminal device in the RRC non-connected mode, or a cell that supports providing a second multicast service for the terminal device in the RRC non-connected mode, or a cell that is providing a second multicast service for the terminal device in the RRC non-connected mode.

The second candidate cell includes some or all cells in the first candidate cell. The second multicast service includes some or all services in the first multicast service.

For example, the first multicast service includes the multicast service 1 and the multicast service 2, and the first candidate cell and the multicast services provided by the first candidate cell for the terminal device in the RRC non-connected mode are shown in Table 1. The second multicast service may be the multicast service 1 and/or the multicast service 2, and the second candidate cell may be at least one of the cell 1, the cell 2, the cell 3, or the cell 4. For example, the second candidate cell may include the cell 1, the cell 2, and the cell 3, and correspondingly, the second multicast service includes the multicast service 1 and the multicast service 2.

Optionally, if the first candidate cell includes the first target cell, and a multicast service provided by the first target cell for the terminal device in the RRC non-connected mode includes a service in the first multicast service, the second candidate cell may be the first target cell. Correspondingly, the second multicast service includes the service in the first multicast service provided by the first target cell for the terminal device in the RRC non-connected mode.

For example, an example in which the first target cell is the cell 1 is used. In this case, the second candidate cell may be the cell 1, and correspondingly, the second multicast service includes the multicast service 1.

According to this solution, because the first target cell is the target cell selected by the source access network device, signal quality of the first target cell may be good. Therefore, the source access network device selects the first target cell as the second candidate cell, and indicates the second candidate cell to the first terminal device, so that the first terminal device can receive the multicast service in the cell with good signal quality, and service receiving quality is improved.

In a possible implementation, after receiving the second message from the target access network device, the source access network device may transparently transmit the first information in the second message to the first terminal device. In other words, the third information is the same as the first information. In this scenario, the second candidate cell includes all the cells in the first candidate cell.

In another possible implementation, after receiving the second message from the target access network device, the source access network device may parse the first information in the second message, then generate the third information, and send the third information to the first terminal device. In this scenario, the third information and the first information may be the same or may be different, and the second candidate cell may include the some or all cells in the first candidate cell.

Optionally, the source access network device may send an RRC release message to the terminal device, and include the third information in the RRC release message. Alternatively, the source access network device may send an RRC reconfiguration message to the terminal device, and include the third information in the RRC reconfiguration message.

Optionally, when the source access network device includes the third information in the RRC reconfiguration message, the third information may be transparently transmitted first information from the target access network device.

After receiving the third information, the first terminal device may enter the RRC non-connected mode and perform the following step S1004, or may enter the RRC non-connected mode and perform the following step S1005. For example, if the third information is carried in the RRC release message, the first terminal device may enter the RRC non-connected mode after receiving the RRC release message. If the third information is carried in the RRC reconfiguration message, the source access network device may further subsequently send an RRC release message to the first terminal device. After receiving the RRC release message, the first terminal device enters the RRC non-connected mode.

S1004: The first terminal device performs cell selection based on the second candidate cell.

Optionally, after entering the RRC non-connected mode, the first terminal device may perform the cell selection based on the second candidate cell. For example, performing the cell selection based on the second candidate cell may be understood as: selecting a cell from the second candidate cell, or considering the second candidate cell during the cell selection. In other words, the second candidate cell may be used as auxiliary information for the cell selection.

For example, considering the second candidate cell during the cell selection may include: During the cell selection, if there are a plurality of cells that satisfy an S criterion, the first terminal device may select a cell that is in the plurality of cells and that belongs to the second candidate cell. Alternatively, during the cell selection, a cell in the second candidate cell may be preferentially selected. For example, when an S value of a cell in the second candidate cell is determined, a first offset value may be introduced, to increase a probability that the first terminal device selects the cell, where the S value may be a value of a variable of the S criterion.

Optionally, the first terminal device may select a second target cell. Further, the first terminal device may further camp on the second target cell. In other words, the first terminal device selects the second target cell during the cell selection. The second target cell is one of second candidate cells. The second target cell and the first target cell may be the same or may be different. This is not specifically limited in this application.

Optionally, because the second target cell can provide a multicast service for the terminal device in the RRC non-connected mode, after camping on the second target cell, the first terminal device may not initiate access in the second target cell, is in the RRC non-connected mode, and receives, in the RRC non-connected mode, a second multicast service provided by the second target cell.

Optionally, the second target cell may satisfy at least one of the following:
(1) The second target cell is a cell that is in the second candidate cell and that provides all services in the first multicast service for the terminal device in the RRC non-connected mode.
   For example, the first multicast service includes the multicast service 1 and the multicast service 2, and the second candidate cell includes the cell 1, the cell 2, and the cell 3 shown in Table 1. Because the cell 3 can provide the multicast service 1 and the multicast service 2 for the terminal device in the RRC non-connected mode, the second target cell may be the cell 3. Correspondingly, the second multicast service includes the multicast service 1 and the multicast service 2.
(2) The second target cell is a cell that is in the second candidate cell and that provides a largest quantity of services in the first multicast service for the terminal device in the RRC non-connected mode.

For example, descriptions are provided by using an example in which the first multicast service includes the multicast service 1, the multicast service 2, and the multicast service 4, and the second candidate cell and multicast services provided by the second candidate cell for the terminal device in the RRC non-connected mode are shown in Table 2.

**Table 2**

| Cell | Multicast services provided for the terminal device in the RRC non-connected mode |
|---|---|
| Cell 1 | Multicast service 1 and multicast service 5 |
| Cell 2 | Multicast service 2 and multicast service 5 |
| Cell 3 | Multicast service 1, multicast service 2, and multicast service 5 |
| Cell 4 | Multicast service 3 and multicast service 4 |

The cell 1, the cell 2, and the cell 4 provide one service in the first multicast service for the terminal device in the RRC non-connected mode, and the cell 3 provides two services in the first multicast service for the terminal device in the RRC non-connected mode. Therefore, the second target cell may be the cell 3. Correspondingly, the second multicast service includes the multicast service 1 and the multicast service 2.

(3) The second target cell is a cell that is in the second candidate cell and that provides a third multicast service for the terminal device in the RRC non-connected mode, where the third multicast service is a service with a highest priority in the first multicast service.

Optionally, a priority of the multicast service may be determined by an application layer, or may be notified to the first terminal device after being determined by a core network device or the access network device.

For example, the first multicast service includes the multicast service 1, the multicast service 2, and the multicast service 4, a priority of the multicast service 1 is higher than a priority of the multicast service 2, the priority of the multicast service 2 is higher than a priority of the multicast service 4, and the second candidate cell and multicast services provided by the second candidate cell for the terminal device in the RRC non-connected mode are shown in Table 2. Because the cell 1 and the cell 3 provide the multicast service 1 with the highest priority for the terminal device in the RRC non-connected mode, the second target cell may be one of the cell 1 and the cell 3. When the second target cell is the cell 1, the second multicast service may include the multicast service 1. When the second target cell is the cell 3, the second multicast service includes the multicast service 1 and the multicast service 2.

(4) The second target cell is a cell that is in the second candidate cell and that provides a largest quantity of third multicast services for the terminal device in the RRC non-connected mode.

For example, the first multicast service includes the multicast service 1, the multicast service 2, and the multicast service 4, a priority of the multicast service 1 is the same as a priority of the multicast service 2 and is higher than a priority of the multicast service 4, and the second candidate cell and multicast services provided by the second candidate cell for the terminal device in the RRC non-connected mode are shown in Table 2. Because the cell 1 and the cell 2 provide one multicast service with the highest priority for the terminal device in the RRC non-connected mode, and the cell 3 provides two multicast services with the highest priority for the terminal device in the RRC non-connected mode, the second target cell may be the cell 3. Correspondingly, the second multicast service includes the multicast service 1 and the multicast service 2.

It may be understood that a service in the first multicast service provided by the second target cell for the terminal device in the RRC non-connected mode belongs to the second multicast service provided by the second target cell for the terminal device in the RRC non-connected mode.

S1005: The first terminal device receives, in the RRC non-connected mode, a second multicast service provided by a second target cell. For descriptions of the second target cell, refer to related descriptions in the foregoing step S1004. Details are not described herein again.

Optionally, after entering the RRC non-connected mode, the first terminal device may perform cell selection based on the second candidate cell. During the cell selection, the first terminal device may select the second target cell and camp on the second target cell. After camping on the second target cell, the first terminal device may not initiate access in the second target cell, is in the RRC non-connected mode, and performs step S1005.

According to the foregoing solution, when the source access network device requests to hand over the first multicast service of the first terminal device to the first target cell, the target access network device may indicate the first candidate cell that provides the multicast service for the terminal device in the RRC non-connected mode, so that the source access network device can indicate the second candidate cell to the first terminal device. Because the second candidate cell includes the some or all cells in the first candidate cell, the second candidate cell can also provide the multicast service for the terminal device in the RRC non-connected mode, so that the first terminal device can receive, in the RRC non-connected mode, the second multicast service provided by the second target cell in the second candidate cell.

If the handover preparation fails, because the second multicast service includes the some or all services in the first multicast service, and the first terminal device receives, in the RRC non-connected mode, the second multicast service provided by the second target cell, the first terminal device can receive the second multicast service as early as possible before re-accessing the cell, service interruption caused by the handover preparation failure is avoided, and continuity of the second multicast service is improved.

If the handover preparation succeeds, the first terminal device receives, in the RRC non-connected mode, the second multicast service provided by the second target cell. In this way, continuity of the second multicast service is improved, and load of the second target cell can be reduced because the first terminal device does not access the second target cell.

Optionally, after selecting the second target cell and camping on the second target cell, the first terminal device may perform cell reselection. For example, the first terminal device may measure signal quality of a serving cell and signal quality of a neighboring cell. It may be understood that when the first terminal device camps on the second target cell, the serving cell of the first terminal device is the second target cell. If the signal quality of the serving cell is poor and the signal quality of the neighboring cell is high, the first terminal device may select the neighboring cell with the better signal quality as the serving cell.

Optionally, the first terminal device may perform the cell reselection based on the second candidate cell. For example, performing the cell reselection based on the second candidate cell may be understood as considering the second candidate cell during the cell reselection. In other words, the second candidate cell may be used as auxiliary information for the cell reselection.

For example, considering the second candidate cell during the cell reselection may include: During the cell reselection, if there are a plurality of cells that satisfy a cell reselection condition, for example, satisfy an S criterion, the first terminal device may reselect a cell that is in the plurality of cells and that belongs to the second candidate cell. Alternatively, when a cell in the neighboring cell belongs to the second candidate cell, the cell in the second candidate cell may be preferentially selected. For example, when an R value of the cell is determined, a second offset value may be introduced, to increase a probability of reselecting the cell. Alternatively, during the cell reselection, if there are a plurality of cells that satisfy a cell reselection condition, for example, satisfy an S criterion, and there is a cell that is in the plurality of cells and that belongs to the second candidate cell, the first terminal device may preferentially select the cell in the second candidate cell. For example, when an R value of the cell is determined, a third offset value may be introduced, to increase a probability of reselecting the cell. The R value may be a value of a variable of an R criterion, and indicates a signal quality level of the cell. It is assumed that a third target cell in the second candidate cell is reselected during the cell reselection. Because the third target cell is a cell in the second candidate cell, and can provide a multicast service for the terminal device in the RRC non-connected mode, the first terminal device may not initiate access in the third target cell, and may receive, in the RRC non-connected mode, a second multicast service provided by the third target cell.

Optionally, in step S1004 or step S1005, the first terminal device performs the cell selection based on the second candidate cell. It is clear that, after receiving the third information and entering the RRC non-connected mode, the first terminal device may alternatively perform cell selection according to a stipulation of a current standard. In other words, the second candidate cell may not be considered during the cell selection. After the cell selection is completed, the first terminal device may perform cell reselection based on the second candidate cell. For details, refer to the foregoing related descriptions of performing the cell reselection based on the second candidate cell, and the details are not described herein again.

The foregoing describes an overall procedure of the mobility management method provided in this application. The following describes the first information indicating the first candidate cell in the foregoing method.

In a possible implementation, the first information indicates that the first candidate cell is the first target cell. Because the first candidate cell is a cell that provides the multicast service for the terminal device in the RRC non-connected mode, when the first information indicates that the first candidate cell is the first target cell, it indicates that the first target cell can provide the multicast service for the terminal device in the RRC non-connected mode.

Optionally, in this scenario, the first information may be a 1-bit indication. When a value of the 1 bit is 1 (or 0), it may indicate that the first candidate cell is the first target cell. That is, implementation of the first information may be shown in the following Table 3.

**Table 3**

| First information | Description |
|---|---|
| 1 bit | When the value of the 1 bit is 1 (or 0), it indicates that the first candidate cell is the first target cell |

Further, the first information may further indicate that the first candidate cell provides the first multicast service for the terminal device in the RRC non-connected mode. To be specific, the first information indicates that the first candidate cell is the first target cell, and the first candidate cell provides the first multicast service for the terminal device in the RRC non-connected mode. That is, the first target cell provides the first multicast service for the terminal device in the RRC non-connected mode. In other words, the first target cell selected by the source access network device can provide, for the terminal device in the RRC non-connected mode, the to-be-handed-over multicast service of the first terminal device.

Optionally, in this scenario, the first information may still be the 1-bit indication. When the value of the 1 bit is 1 (or 0), it may indicate that the first candidate cell is the first target cell, and the first target cell provides the first multicast service for the terminal device in the RRC non-connected mode. That is, implementation of the first information may be shown in the following Table 4.

**Table 4**

| First information | Description |
|---|---|
| 1 bit | When the value of the 1 bit is 1 (or 0), it indicates that the first candidate cell is the first target cell, and the first target cell provides the first multicast service for the terminal device in the RRC non-connected mode |

Alternatively, the first information may further indicate the multicast service provided by the first candidate cell for the terminal device in the RRC non-connected mode. For example, the first information may include an identifier of the multicast service provided by the first candidate cell for the terminal device in the RRC non-connected mode.

In this scenario, the first information may include the identifier of the multicast service. Optionally, the first information may further include the 1-bit indication. When the value of the 1-bit indication is 1 (or 0), it may indicate that the first candidate cell is the first target cell. The identifier of the multicast service may indicate the multicast service provided by the first target cell for the terminal device in the RRC non-connected mode. When the first information does not include the 1-bit indication, the identifier of the multicast service may further indicate that the first candidate cell is the first target cell. That is, implementation of the first information may be shown in the following Table 5.

**Table 5**

| First information | Description |
|---|---|
| 1 bit (optional) | When the value of the 1 bit is 1 (or 0), it indicates that the first candidate cell is the first target cell |
| Multicast service identifier list | The multicast service identifier list may include identifiers of a plurality of multicast services, to indicate the multicast service provided by the first target cell for the terminal device in the RRC non-connected mode; and further indicate that the first candidate cell is the first target cell (optional) |

In another possible implementation, the first information may indicate an identifier of the first candidate cell. Because the first candidate cell is a cell that provides the multicast service for the terminal device in the RRC non-connected mode, when the first information indicates the identifier of the first candidate cell, it indicates that the target access network device may indicate which cells are first candidate cells.

Optionally, in this scenario, the first information may include the identifier of the first candidate cell. That is, implementation of the first information may be shown in the following Table 6.

**Table 6**

| First information | Description |
|---|---|
| Identifier of the first candidate cell | The identifier of the first candidate cell indicates the first candidate cell, in other words, indicates a cell that provides the multicast service for the terminal device in the RRC non-connected mode |

Alternatively, when the source access network device has learned of information about all cells managed by the target access network device, the first information may include a bitmap (bitmap). An example in which the target access network device manages N cells in total is used. The bitmap may include N bits that are in one-to-one correspondence with the N cells, where N is a positive integer. When a value of a bit is 1 (or 0), it indicates that a cell corresponding to the bit belongs to the first candidate cell. In other words, the first candidate cell includes the cell corresponding to the bit whose value is 1 (or 0). That is, implementation of the first information may be shown in the following Table 7.

**Table 7**

| First information | Description |
|---|---|
| Bitmap including the N bits | The N bits are in one-to-one correspondence with the N cells; and when a value of a bit is 1 (or 0), it indicates that a cell corresponding to the bit belongs to the first candidate cell |

When the implementation of the first information is shown in Table 6 or Table 7, it may be considered that the target access network device does not indicate a specific service provided by the first candidate cell for the terminal device in the RRC non-connected mode. Therefore, the source access network device may not learn of specific multicast services in the non-connected mode provided by the first candidate cell, and correspondingly, the first terminal device may not learn of specific multicast services in the non-connected mode provided by the second target cell. In this case, after camping on the second target cell, the first terminal device may parse, in the RRC non-connected mode, data of the multicast service by using a G-RNTI corresponding to the first multicast service. If the parsing succeeds, it indicates that the second target cell can provide the first multicast service.

In addition, the target access network device may indicate a specific service provided by the first candidate cell for the terminal device in the RRC non-connected mode.

For example, the first information may further indicate that the first candidate cell provides the first multicast service for the terminal device in the RRC non-connected mode. To be specific, the first information indicates the first candidate cell, and indicates that the first candidate cell provides the first multicast service for the terminal device in the RRC non-connected mode.

Optionally, in this scenario, the first information may still include the identifier of the first candidate cell, or the bitmap including the N bits, to indicate the first candidate cell and indicate that the first candidate cell provides the first multicast service for the terminal device in the RRC non-connected mode. That is, implementation of the first information may be shown in the following Table 8 or Table 9.

**Table 8**

| First information | Description |
|---|---|
| Identifier of the first candidate cell | The identifier of the first candidate cell indicates the first candidate cell, and indicates that the first candidate cell provides the first multicast service for the terminal device in the RRC non-connected mode |

**Table 9**

| First information | Description |
|---|---|
| Bitmap including the N bits | The N bits are in one-to-one correspondence with the N cells, and when a value of a bit is 1 (or 0), it indicates that a cell corresponding to the bit belongs to the first candidate cell, and the first candidate cell provides the first multicast service for the terminal device in the RRC non-connected mode |

Alternatively, the first information may further indicate the multicast service provided by the first candidate cell for the terminal device in the RRC non-connected mode. For example, the first information may include an identifier of the multicast service provided by the first candidate cell for the terminal device in the RRC non-connected mode.

In other words, in this scenario, the first information may include the identifier of the first candidate cell and the identifier of the multicast service, to indicate a specific multicast service provided by the first candidate cell for the terminal device in the RRC non-connected mode. That is, implementation of the first information may be shown in the following Table 10.

**Table 10**

| First information | | Description |
|---|---|---|
| Identifier of the first candidate cell | Identifier of the multicast service | The identifier of the first candidate cell and the identifier of the multicast service indicate the multicast service provided by the first candidate cell for the terminal device in the RRC non-connected mode |

For example, that the first candidate cell represents the cell 1, the cell 2, the cell 3, and the cell 4 is used as an example, and the foregoing Table 10 may be further represented as the following Table 11.

**Table 11**

| First information | | Description |
|---|---|---|
| Identifier of the cell 1 | Identifier of the multicast service 1 and identifier of the multicast service 3 | The identifier of the cell 1, the identifier of the multicast service 1, and the identifier of the multicast service 3 indicate that the cell 1 provides the multicast service 1 and the multicast service 3 for the terminal device in the RRC non-connected mode |
| Identifier of the cell 2 | Identifier of the multicast service 2 and identifier of the multicast service 3 | The identifier of the cell 2, the identifier of the multicast service 2, and the identifier of the multicast service 3 indicate that the cell 2 provides the multicast service 2 and the multicast service 3 for the terminal device in the RRC non-connected mode |
| Identifier of the cell 3 | Identifier of the multicast service 1, identifier of the multicast service 2, and identifier of the multicast service 4 | The identifier of the cell 3, the identifier of the multicast service 1, the identifier of the multicast service 2, and the identifier of the multicast service 4 indicate that the cell 3 provides the multicast service 1, the multicast service 2, and the multicast service 4 for the terminal device in the RRC non-connected mode |
| Identifier of the cell 4 | Identifier of the multicast service 3 and identifier of the multicast service 4 | The identifier of the cell 4, the identifier of the multicast service 3, and the identifier of the multicast service 4 indicate that the cell 4 provides the multicast service 3 and the multicast service 4 for the terminal device in the RRC non-connected mode |

Optionally, the identifier of the cell may be a cell global identifier (cell global identifier, CGI), or may be a physical cell identifier (physical cell identifier, PCI). When the first candidate cell and a source cell are inter-frequency cells, in addition to the PCI, the first information may further include frequency information of the first candidate cell, for example, a value (value) of an absolute radio frequency channel number (absolute radio frequency channel number, ARFCN). The source cell is a serving cell of the first terminal device before the handover, and is a cell managed by the source access network device.

In some embodiments, the first message in step S1001 may include second information. The second information may indicate at least one of the following: a mode of an MBS session of the first multicast service, an identifier of a PDU session associated with the MBS session of the first multicast service, or an identifier of a PDU session of the first terminal device.

The mode of the MBS session of the first multicast service includes an active mode or a deactivated mode. The PDU session of the first terminal device includes the PDU session associated with the MBS session of the first multicast service.

For example, an example in which the first multicast service includes the multicast service 1, the multicast service 2, and the multicast service 3 is used, and content included in the second information may be shown in Table 12.

**Table 12**

| MBS session identifier | MBS session identifier 1 (corresponding to the multicast service 1) | MBS session identifier 2 (corresponding to the multicast service 2) | MBS session identifier 3 (corresponding to the multicast service 3) |
|---|---|---|---|
| Mode of the MBS session | Active | Deactivated | Active |
| the MBS session | PDU session identifier 3 | PDU session identifier 1 | PDU session identifier 2 |
| Identifier of the PDU session of the first terminal device | PDU session identifier 1, PDU session identifier 2, and PDU session identifier 3 | | |

Optionally, after receiving the second information, the target access network device may perform determining, and send the second message when a target condition is satisfied, or include the first information in the second message when a target condition is satisfied.

Optionally, the target condition includes: the first candidate cell provides the second multicast service for the terminal device in the RRC non-connected mode, where the second multicast service includes the some or all services in the first multicast service.

For example, the some services in the first multicast service may include: some or all services whose MBS sessions are in an active mode in the first multicast service. To be specific, when the first candidate cell provides, for the terminal device in the RRC non-connected mode, the some or all services whose MBS sessions are in the active mode in the first multicast service, the target access network device may send the second message, or include the first information in the second message. Based on the example shown in Table 12, if the first candidate cell provides the multicast service 1 and/or the multicast service 2 for the terminal device in the RRC non-connected mode, the target access network device may send the second message, or include the first information in the second message.

Optionally, the target condition may further include: An MBS session of the second multicast service is associated with all PDU sessions of the first terminal device. Based on the example shown in Table 12, that the second multicast service includes the multicast service 1, the multicast service 2, and the multicast service 3 is used as an example. The MBS session of the second multicast service is associated with all the PDU sessions of the first terminal device, and in this case, the target access network device may send the second message, or include the first information in the second message.

Alternatively, the target condition may further include: A QoS flow of an MBS session of the second multicast service is associated with all QoS flows of all PDU sessions of the first terminal device. Based on the example shown in Table 12, that the second multicast service includes the multicast service 1, the multicast service 2, and the multicast service 3 is used as an example. The MBS session of the second multicast service is associated with all the PDU sessions of the first terminal device. If the QoS flow of the MBS session of the second multicast service is further associated with all the QoS flows of all the PDU sessions of the first terminal device, the target access network device may send the second message, or include the first information in the second message.

Optionally, the PDU session of the first terminal device is established for a unicast service. When all the PDU sessions of the first terminal device are associated with the MBS session, it indicates that the first terminal device currently has no ongoing unicast service, or it indicates that the first terminal device has no unicast service that needs to be handed over. In this case, execution of the solutions of this application does not affect the unicast service.

It should be noted that the method shown in FIG. 10 may be applied to an Xn-based handover scenario, and is applicable to any other handover scenario in which there is a communication interface between access network devices. The handover scenario imposes no limitation on the method shown in FIG. 10.

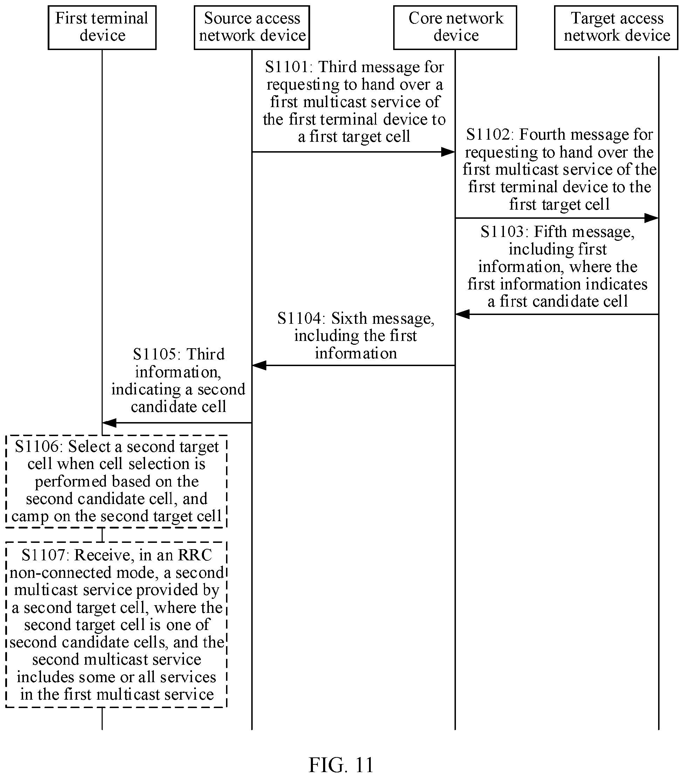

In addition to the method shown in FIG. 10, this application further provides another mobility management method. The method may be applied to an NG-based handover scenario, or is applicable to any other handover scenario in which there is no communication interface between access network devices. As shown in FIG. 11, the mobility management method includes the following steps.

S1101: A source access network device sends a third message to a core network device. Correspondingly, the core network device receives the third message from the source access network device.

The third message is for requesting to hand over a first multicast service of a first terminal device to a first target cell. Optionally, the third message may be a handover require (Handover Require) message. The third message may include information a, and the information a includes at least one of an identifier of the first terminal device, an identifier of the first multicast service, an identifier of the first target cell, or second information. For details, refer to related implementation of the foregoing first message, and the details are not described herein again.

S1102: The core network device sends a fourth message to a target access network device. Correspondingly, the target access network device receives the fourth message from the core network device.

The fourth message is for requesting to hand over the first multicast service of the first terminal device to the first target cell. The fourth message may include information b, and the information b may include at least one of the following plurality of items: the identifier of the first terminal device, the identifier of the first multicast service, the identifier of the first target cell, or the second information. For details, refer to related implementation of the foregoing first message, and the details are not described herein again.

Optionally, after receiving the third message, the core network device may use the information a included in the third message as the information b and send the information b to the target access network device. In other words, the core network device may transparently transmit the information a from the source access network device to the target access network device. Alternatively, the information b may be generated based on the information a. For example, after receiving the information a, the core network device may parse the information a, generate the information b based on the information a, and then send the generated information b to the target access network device.

S1103: The target access network device sends a fifth message to the core network device. Correspondingly, the core network device receives the fifth message from the target access network device.

The fifth message is a response message of the fourth message. The fifth message includes first information, and the first information indicates a first candidate cell. For details, refer to related descriptions of the first information in the method shown in FIG. 10, and the details are not described herein again.

Optionally, after receiving the fourth message, the target access network device may also perform determining, and send the fifth message when a target condition is satisfied, or include the first information in the fifth message. For details, refer to related descriptions of the target condition in the method shown in FIG. 10, and the details are not described herein again.

Optionally, the fifth message may indicate a handover failure. For example, the fifth message may be a handover failure (Handover Failure) message. Alternatively, the fifth message may indicate a handover success. For details, refer to related descriptions of the second message, and the details are not described herein again.

S1104: The core network device sends a sixth message to the source access network device. Correspondingly, the source access network device receives the sixth message from the core network device.

The sixth message includes information c, and the information c indicates the first candidate cell. Optionally, after receiving the sixth message, the core network device may use the first information included in the sixth message as the information c and send the information c to the source access network device. In other words, the core network device may transparently transmit the first information from the target access network device to the source access network device. Alternatively, the information c may be generated based on the first information. For example, after receiving the first information, the core network device may parse the first information, generate the information c based on the first information, and then send the generated information c to the source access network device.

Optionally, when the fifth message indicates the handover failure, the sixth message may be a handover preparation failure (Handover Preparation Failure) message.

S1105: The source access network device sends third information to the first terminal device. Correspondingly, the first terminal device receives the third information from the source access network device.

After receiving the third information, the first terminal device may enter an RRC non-connected mode, and perform the following step S1106 or S1107.

S1106: When performing cell selection based on a second candidate cell, the first terminal device selects a second target cell, and camps on the second target cell.

S1107: The first terminal device receives, in the RRC non-connected mode, a second multicast service provided by a second target cell.

Related implementation of steps S1105 to S1107 is similar to that of steps S1003 to S1005, and a difference lies in that: The third information in step S1105 may be generated by the source access network device based on the information c, or the third information may be the same as the information c. For other related descriptions, refer to the foregoing steps S1003 to S1005. Details are not described herein again.

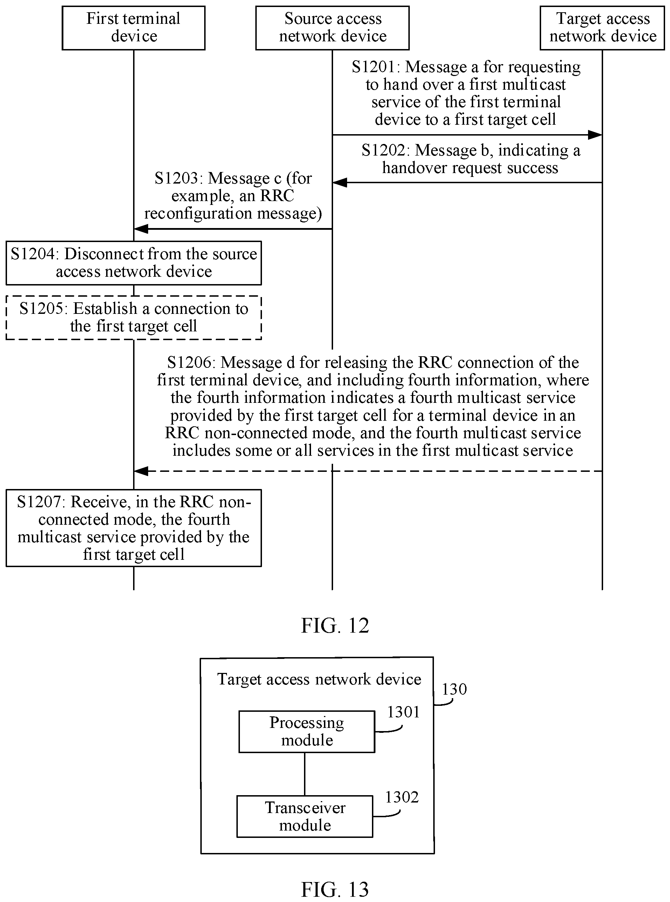

In the methods shown in FIG. 10 and FIG. 11, it may be considered that the source access network device releases the first terminal device to the RRC non-connected mode. In addition, this application further provides a mobility management method, where a target access network device may release a first terminal device to an RRC non-connected mode. As shown in FIG. 12, the mobility management method includes the following steps.

S1201: A source access network device sends a message a to a target access network device. Correspondingly, the target access network device receives the message a from the source access network device.

The message a is for requesting to hand over a first multicast service of a first terminal device to a first target cell. For implementation of step S1201, refer to related descriptions in the foregoing step S1001. Details are not described herein again.

S1202: The target access network device sends a message b to the source access network device. Correspondingly, the source access network device receives the message b from the target access network device. The message b is a response to the message a.

Optionally, the message b may include fourth information, and the fourth information indicates a fourth multicast service that the first target cell provides (can provide/supports providing/is providing) for a terminal device in an RRC non-connected mode. The fourth multicast service includes some or all services in the first multicast service.

In a possible implementation, when the first target cell can provide all the services in the first multicast service for the terminal device in the RRC non-connected mode, that is, when the fourth multicast service includes all the services in the first multicast service, the fourth information may be a 1-bit indication. When a value of the bit is 1 (or 0), it indicates that the first target cell provides all the services in the first multicast service for the terminal device in the RRC non-connected mode.

In another possible implementation, when the first target cell can provide the some services in the first multicast service for the terminal device in the RRC non-connected mode, the fourth information may indicate the some services. For example, the fourth information may include identifiers of the some services. Alternatively, the fourth information may include a bitmap, where each bit in the bitmap corresponds to one service in the first multicast service, and when a value of a bit is 1 (or 0), it indicates that the first target cell provides a service corresponding to the bit for the terminal device in the RRC non-connected mode.

Optionally, the message b may indicate a handover request success. For example, the message b may be a handover request acknowledgement (handover request acknowledgement) message.

Optionally, after receiving the message a, the message b may indicate the handover request success regardless of whether the target access network device can accept a handover request of the source access network device.

Optionally, after receiving the message a, the target access network device may also perform determining, and send the message b when a target condition is satisfied, or include the fourth information in the message b. For details, refer to related descriptions of the target condition in the method shown in FIG. 10, and the details are not described herein again.

S1203: The source access network device sends a message c to the first terminal device. Correspondingly, the first terminal device receives the message c from the source access network device.

For example, the message c may be an RRC reconfiguration (RRC reconfiguration) message. The message c may further indicate information for handover, such as the first target cell.

Optionally, when the message b includes the fourth information, the message c also includes the fourth information. In FIG. 12, an example in which the message b does not include the fourth information is used for description.

S 1204: The first terminal device disconnects from the source access network device.

Optionally, after step S 1204, steps S1205 to S 1207 may be performed, or S1205 and S1206 may not be performed, and S1207 is directly performed.

S1205: The first terminal device establishes a connection to the first target cell.

S1206: The target access network device sends a message d to the first terminal device. Correspondingly, the first terminal device receives the message d from the target access network device.

The message d may be for releasing an RRC connection of the first terminal device. For example, the message d may be an RRC release message.

Optionally, the message d may include the fourth information. For details, refer to related descriptions of the fourth information in step S1202, and the details are not described herein again.

Optionally, after receiving the message d, the first terminal device may enter the RRC non-connected mode, camp on the first target cell, and perform the following step S1207.

S1207: The first terminal device receives, in the RRC non-connected mode, the fourth multicast service provided by the first target cell.

Optionally, after receiving the fourth information, the first terminal device may learn that the first target cell provides the fourth multicast service for the terminal device in the RRC non-connected mode. In other words, the first terminal device may receive the fourth multicast service in the RRC non-connected mode. In this case, the first terminal device may choose to establish the connection to the first target cell, that is, perform the foregoing step S1205, or may choose not to perform the foregoing step S1205, that is, do not initiate access after camping on the first target cell.

It may be understood that the method shown in FIG. 12 may also be properly modified with reference to FIG. 11, to be applied to the handover scenario in which there is no communication interface between access network devices.

According to the foregoing solutions, when the source access network device requests to hand over the first multicast service of the first terminal device to the first target cell, the target access network device may indicate the some or all services in the first multicast service provided by the first target cell for the terminal device in the RRC non-connected mode, so that the first terminal device can receive, in the RRC non-connected mode, the some or all services in the first multicast service provided by the first target cell. Therefore, even if the first target cell cannot accept the handover request of the source access network device, the first terminal device can receive the some or all services in the first multicast service from the first target cell, so that continuity of the multicast service is improved.

It may be understood that, in the foregoing embodiments, the methods and/or the steps implemented by the access network device may be implemented by a component (for example, a processor, a chip, a chip system, a circuit, a logical module, or software such as a chip or a circuit) that can be used in the access network device; or the methods and/or the steps implemented by the terminal device may also be implemented by a component (for example, a processor, a chip, a chip system, a circuit, a logical module, or software such as a chip or a circuit) that can be used in the terminal device.

The foregoing mainly describes the solutions provided in this application. Correspondingly, this application further provides a communication apparatus. The communication apparatus is configured to implement the foregoing methods. The communication apparatus may be the access network device (including the target access network device or the source access network device) in the foregoing method embodiments, or an apparatus including the foregoing access network device, or a component that can be used in the access network device, for example, a chip or a chip system. Alternatively, the communication apparatus may be the terminal device in the foregoing method embodiments, or an apparatus including the foregoing terminal device, or a component that can be used in the terminal device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by the hardware or the hardware driven by the computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus is divided into functional modules based on the foregoing method embodiments. For example, each functional module corresponding to each function may be obtained through division, or two or more functions may be integrated into one processing module. The foregoing integrated module may be implemented in a form of hardware, or may be implemented in a form of a software functional module. It should be noted that, in embodiments of this application, module division is an example, and is merely a logical function division. In actual implementation, another division manner may be used.

Optionally, an example in which the communication apparatus is the target access network device in the foregoing method embodiments is used. FIG. 13 is a diagram of a structure of a target access network device 130. The target access network device 130 includes a processing module 1301 and a transceiver module 1302.

In some embodiments, the target access network device 130 may further include a storage module (not shown in FIG. 13), configured to store program instructions and data.

In some embodiments, the transceiver module 1302 may also be referred to as a transceiver unit, configured to implement a sending function and/or a receiving function. The transceiver module 1302 may include a transceiver circuit, a transceiver machine, a transceiver, or a communication interface.

In some embodiments, the transceiver module 1302 may include a receiving module and a sending module, respectively configured to perform receiving and sending steps performed by the access network device in the foregoing method embodiments, and/or configured to support another process of the technology described in this specification. The processing module 1301 may be configured to perform a processing (for example, determining and generating) step performed by the access network device in the foregoing method embodiments, and/or configured to support another process of the technology described in this specification.

The transceiver module 1302 is configured to receive a first message, where the first message is for requesting to hand over a first multicast service of a first terminal device to a first target cell.

The transceiver module 1302 is further configured to send a second message, where the second message is a response message of the first message, the second message includes first information, the first information indicates a first candidate cell, and the first candidate cell is a cell that provides a multicast service for a terminal device in a radio resource control RRC non-connected mode.

Optionally, the processing module 1301 is configured to generate the second message.

Optionally, the first information indicates that the first candidate cell is the first target cell.

Optionally, the first information indicates an identifier of the first candidate cell.

Optionally, the first information further indicates the multicast service provided by the first candidate cell for the terminal device in the RRC non-connected mode.

Optionally, the first information further indicates that the first candidate cell provides the first multicast service for the terminal device in the RRC non-connected mode.

Optionally, the first message includes second information, and the second information indicates at least one of the following: a mode of a multicast and broadcast service MBS session of the first multicast service, an identifier of a protocol data unit PDU session associated with the MBS session of the first multicast service, or an identifier of a PDU session of the first terminal device. The mode of the MBS session of the first multicast service includes an active mode or a deactivated mode, and the PDU session of the first terminal device includes the PDU session associated with the MBS session of the first multicast service.

Optionally, the processing module 1301 is configured to determine that when a target condition is satisfied, the second message includes the first information; and the target condition includes: The first candidate cell provides a second multicast service for the terminal device in the RRC non-connected mode, where the second multicast service includes some or all services in the first multicast service.

Optionally, the some services in the first multicast service include: some or all services whose MBS sessions are in the active mode in the first multicast service.

Optionally, the target condition further includes: An MBS session of the second multicast service is associated with all PDU sessions of the first terminal device; or a QoS flow of an MBS session of the second multicast service is associated with all quality of service QoS flows of all PDU sessions of the first terminal device.

Optionally, the multicast service provided by the first candidate cell for the terminal device in the RRC non-connected mode includes the some or all services in the first multicast service.

Optionally, the first message is a handover request message, and the second message is a handover preparation failure message.

All related content of the steps in the foregoing method embodiments may be cited in function descriptions of the corresponding functional modules. Details are not described herein again.

In this application, the target access network device 130 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the target access network device 130 may use a form of the communication apparatus 300 shown in FIG. 3.

For example, functions/implementation processes of the processing module 1301 in FIG. 13 may be implemented by the processor 301 in the communication apparatus 300 shown in FIG. 3 by invoking the computer-executable instructions stored in the memory 303. Functions/implementation processes of the transceiver module 1302 in FIG. 13 may be implemented by the communication interface 304 in the communication apparatus 300 shown in FIG. 3.

In some embodiments, when the target access network device 130 in FIG. 13 is a chip or a chip system, the functions/implementation processes of the transceiver module 1302 may be implemented by an input/output interface (or a communication interface) of the chip or the chip system, and the functions/implementation processes of the processing module 1301 may be implemented by a processor (or a processing circuit) of the chip or the chip system.

Because the target access network device 130 provided in this embodiment may perform the foregoing methods, for a technical effect that can be obtained by the target access network device 130, refer to the foregoing method embodiments. Details are not described herein again.

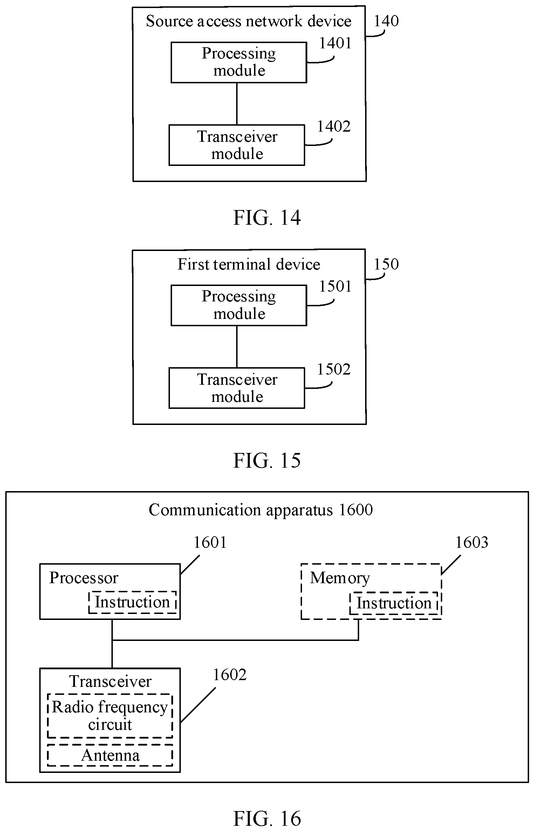

Optionally, an example in which the communication apparatus is the source access network device in the foregoing method embodiments is used. FIG. 14 is a diagram of a structure of a source access network device 140. The source access network device 140 includes a processing module 1401 and a transceiver module 1402.

In some embodiments, the source access network device 140 may further include a storage module (not shown in FIG. 14), configured to store program instructions and data.

In some embodiments, the transceiver module 1402 may also be referred to as a transceiver unit, configured to implement a sending function and/or a receiving function. The transceiver module 1402 may include a transceiver circuit, a transceiver machine, a transceiver, or a communication interface.

In some embodiments, the transceiver module 1402 may include a receiving module and a sending module, respectively configured to perform receiving and sending steps performed by the access network device in the foregoing method embodiments, and/or configured to support another process of the technology described in this specification. The processing module 1401 may be configured to perform a processing (for example, determining and generating) step performed by the access network device in the foregoing method embodiments, and/or configured to support another process of the technology described in this specification.

The transceiver module 1402 is configured to send a first message, where the first message is for requesting to hand over a first multicast service of a first terminal device to a first target cell.

The transceiver module 1402 is further configured to receive a second message, where the second message is a response message of the first message, the second message includes first information, the first information indicates a first candidate cell, and the first candidate cell is a cell that provides a multicast service for a terminal device in a radio resource control RRC non-connected mode.

The transceiver module 1402 is further configured to send third information to the first terminal device, where the third information indicates a second candidate cell, the second candidate cell is a cell that provides a second multicast service for the terminal device in the radio resource control RRC non-connected mode, and the second multicast service includes some or all services in the first multicast service.

Optionally, the processing module 1401 is configured to generate the first message.

Optionally, the second candidate cell includes the some or all cells in the first candidate cell.

Optionally, the first information indicates that the first candidate cell is the first target cell.

Optionally, the first information indicates an identifier of the first candidate cell.

Optionally, the first information further indicates the multicast service provided by the first candidate cell for the terminal device in the RRC non-connected mode.

Optionally, the first information further indicates that the first candidate cell provides the first multicast service for the terminal device in the RRC non-connected mode.

All related content of the steps in the foregoing method embodiments may be cited in function descriptions of the corresponding functional modules. Details are not described herein again.

In this application, the source access network device 140 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the source access network device 140 may use a form of the communication apparatus 300 shown in FIG. 3.

For example, functions/implementation processes of the processing module 1401 in FIG. 14 may be implemented by the processor 301 in the communication apparatus 300 shown in FIG. 3 by invoking the computer-executable instructions stored in the memory 303. Functions/implementation processes of the transceiver module 1402 in FIG. 14 may be implemented by the communication interface 304 in the communication apparatus 300 shown in FIG. 3.

In some embodiments, when the source access network device 140 in FIG. 14 is a chip or a chip system, the functions/implementation processes of the transceiver module 1402 may be implemented by an input/output interface (or a communication interface) of the chip or the chip system, and the functions/implementation processes of the processing module 1401 may be implemented by a processor (or a processing circuit) of the chip or the chip system.

Because the source access network device 140 provided in this embodiment may perform the foregoing methods, for a technical effect that can be obtained by the source access network device 140, refer to the foregoing method embodiments. Details are not described herein again.

Optionally, an example in which the communication apparatus is the first terminal device in the foregoing method embodiments is used. FIG. 15 is a diagram of a structure of a first terminal device 150. The first terminal device 150 includes a processing module 1501 and a transceiver module 1502.

In some embodiments, the first terminal device 150 may further include a storage module (not shown in FIG. 15), configured to store program instructions and data.

In some embodiments, the transceiver module 1502 may also be referred to as a transceiver unit, configured to implement a sending function and/or a receiving function. The transceiver module 1502 may include a transceiver circuit, a transceiver machine, a transceiver, or a communication interface.

In some embodiments, the transceiver module 1502 may include a receiving module and a sending module, respectively configured to perform receiving and sending steps performed by the access network device in the foregoing method embodiments, and/or configured to support another process of the technology described in this specification. The processing module 1501 may be configured to perform a processing (for example, determining and generating) step performed by the access network device in the foregoing method embodiments, and/or configured to support another process of the technology described in this specification.

The transceiver module 1502 is configured to receive third information from a source access network device, where the third information indicates a second candidate cell, and the second candidate cell is a cell that provides a second multicast service for a terminal device in a radio resource control RRC non-connected mode.

The transceiver module 1502 is further configured to receive, in the RRC non-connected mode, the second multicast service provided by a second target cell, where the second target cell is one of second candidate cells.

Optionally, the processing module 1501 is configured to select the second target cell when cell selection is performed based on the second candidate cell; and the processing module 1501 is further configured to control the first terminal device to camp on the second target cell.

Optionally, the second multicast service includes some or all services in a first multicast service, and the first multicast service is a to-be-handed-over service received by the first terminal device in the source access network device.

Optionally, the second target cell satisfies at least one of the following:
The second target cell is a cell that is in the second candidate cell and that provides all services in the first multicast service for the terminal device in the RRC non-connected mode;
the second target cell is a cell that is in the second candidate cell and that provides a largest quantity of services in the first multicast service for the terminal device in the RRC non-connected mode;
the second target cell is a cell that is in the second candidate cell and that provides a third multicast service for the terminal device in the RRC non-connected mode, where the third multicast service is a service with a highest priority in the first multicast service; or
the second target cell is a cell that is in the second candidate cell and that provides a largest quantity of third multicast services for the terminal device in the RRC non-connected mode.

All related content of the steps in the foregoing method embodiments may be cited in function descriptions of the corresponding functional modules. Details are not described herein again.

In this application, the first terminal device 150 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, in hardware implementation, a person skilled in the art may figure out that the first terminal device 150 may use a form of the communication apparatus 300 shown in FIG. 3.

For example, functions/implementation processes of the processing module 1501 in FIG. 15 may be implemented by the processor 301 in the communication apparatus 300 shown in FIG. 3 by invoking the computer-executable instructions stored in the memory 303. Functions/implementation processes of the transceiver module 1502 in FIG. 15 may be implemented by the communication interface 304 in the communication apparatus 300 shown in FIG. 3.

In some embodiments, when the first terminal device 150 in FIG. 15 is a chip or a chip system, the functions/implementation processes of the transceiver module 1502 may be implemented by an input/output interface (or a communication interface) of the chip or the chip system, and the functions/implementation processes of the processing module 1501 may be implemented by a processor (or a processing circuit) of the chip or the chip system.

Because the first terminal device 150 provided in this embodiment may perform the foregoing methods, for a technical effect that can be obtained by the first terminal device 150, refer to the foregoing method embodiments. Details are not described herein again.

In a possible product form, the access network device or the terminal device in embodiments of this application each may be implemented by using one or more field programmable gate arrays (field programmable gate arrays, FPGAs), a programmable logic device (programmable logic device, PLD), a controller, a state machine, a gate logic, a discrete hardware component, any other appropriate circuit, or any combination of circuits that can perform various functions described in this application.

In another possible product form, the terminal device or the access network device in embodiments of this application may be implemented by a general bus architecture. For ease of description, refer to FIG. 16. FIG. 16 is a diagram of a structure of a communication apparatus 1600 according to an embodiment of this application. The communication apparatus 1600 includes a processor 1601 and a transceiver 1602. The communication apparatus 1600 may be a terminal device or a chip in the terminal device; or the communication apparatus 1600 may be an access network device or a chip or a module in the access network device. FIG. 16 shows only main components of the communication apparatus 1600. In addition to the processor 1601 and the transceiver 1602, the communication apparatus may further include a memory 1603 and an input/output apparatus (not shown in the figure).

Optionally, the processor 1601 is mainly configured to: process a communication protocol and communication data, control the entire communication apparatus, execute a software program, and process data of the software program. The memory 1603 is mainly configured to store the software program and data. The transceiver 1602 may include a radio frequency circuit and an antenna. The radio frequency circuit is mainly configured to: perform conversion between a baseband signal and a radio frequency signal, and process a radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1601, the transceiver 1602, and the memory 1603 may be connected through a communication bus.

After the communication apparatus is powered on, the processor 1601 may read the software program from the memory 1603, interpret and execute instructions of the software program, and process the data of the software program. When data needs to be sent wirelessly, the processor 1601 performs baseband processing on the to-be-sent data, and then outputs a baseband signal to the radio frequency circuit. The radio frequency circuit performs radio frequency processing on the baseband signal, and then sends, via the antenna, a radio frequency signal in the form of the electromagnetic wave. When data is sent to the communication apparatus, the radio frequency circuit receives the radio frequency signal via the antenna, converts the radio frequency signal into a baseband signal, and outputs the baseband signal to the processor 1601. The processor 1601 converts the baseband signal into data for processing.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. It is clear that the communication apparatus may not include a memory.

In another possible implementation, the communication apparatus further includes an interface circuit. The interface circuit is a code/data read/write interface circuit, and the interface circuit is configured to receive computer-executable instructions (the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions of any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located together in the same place or distributed on a plurality of network units. A component displayed as a unit may or may not be a physical unit. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A mobility management method, wherein the method comprises:
receiving a first message, wherein the first message is for requesting to hand over a first multicast service of a first terminal device to a first target cell; and
sending a second message, wherein the second message is a response message of the first message, the second message comprises first information, the first information indicates a first candidate cell, and the first candidate cell is a cell that provides a multicast service for a terminal device in a radio resource control RRC non-connected mode.

2. The method according to claim 1, wherein the first information indicates that the first candidate cell is the first target cell.

3. The method according to claim 1, wherein the first information indicates an identifier of the first candidate cell.

4. The method according to claim 2 or 3, wherein the first information further indicates the multicast service provided by the first candidate cell for the terminal device in the RRC non-connected mode.

5. The method according to claim 2 or 3, wherein the first information further indicates that the first candidate cell provides the first multicast service for the terminal device in the RRC non-connected mode.

6. The method according to any one of claims 1 to 5, wherein the first message comprises second information, and the second information indicates at least one of the following: a mode of a multicast and broadcast service MBS session of the first multicast service, an identifier of a protocol data unit PDU session associated with the MBS session of the first multicast service, or an identifier of a PDU session of the first terminal device; and
the mode of the MBS session of the first multicast service comprises an active mode or a deactivated mode, and the PDU session of the first terminal device comprises the PDU session associated with the MBS session of the first multicast service.

7. The method according to claim 6, wherein when a target condition is satisfied, the second message comprises the first information; and
the target condition comprises: the first candidate cell provides a second multicast service for the terminal device in the RRC non-connected mode, wherein the second multicast service comprises some or all services in the first multicast service.

8. The method according to claim 7, wherein the some services in the first multicast service comprise some or all services whose MBS sessions are in the active mode in the first multicast service.

9. The method according to claim 7 or 8, wherein the target condition further comprises:
an MBS session of the second multicast service is associated with all PDU sessions of the first terminal device; or
a QoS flow of an MBS session of the second multicast service is associated with all quality of service QoS flows of all PDU sessions of the first terminal device.

10. The method according to any one of claims 1 to 9, wherein the multicast service provided by the first candidate cell for the terminal device in the RRC non-connected mode comprises the some or all services in the first multicast service.

11. The method according to any one of claims 1 to 10, wherein the first message is a handover request message, and the second message is a handover preparation failure message.

12. A mobility management method, wherein the method comprises:
sending a first message, wherein the first message is for requesting to hand over a first multicast service of a first terminal device to a first target cell;
receiving a second message, wherein the second message is a response message of the first message, the second message comprises first information, the first information indicates a first candidate cell, and the first candidate cell is a cell that provides a multicast service for a terminal device in a radio resource control RRC non-connected mode; and
sending third information to the first terminal device, wherein the third information indicates a second candidate cell, the second candidate cell is a cell that provides a second multicast service for the terminal device in the radio resource control RRC non-connected mode, and the second multicast service comprises some or all services in the first multicast service.

13. The method according to claim 12, wherein the second candidate cell comprises some or all cells in the first candidate cell.

14. The method according to claim 12 or 13, wherein the first information indicates that the first candidate cell is the first target cell.

15. The method according to claim 12 or 13, wherein the first information indicates an identifier of the first candidate cell.

16. The method according to claim 14 or 15, wherein the first information further indicates the multicast service provided by the first candidate cell for the terminal device in the RRC non-connected mode.

17. The method according to claim 14 or 15, wherein the first information further indicates that the first candidate cell provides the first multicast service for the terminal device in the RRC non-connected mode.

18. A mobility management method, wherein the method comprises:
receiving third information from a source access network device, wherein the third information indicates a second candidate cell, and the second candidate cell is a cell that provides a second multicast service for a terminal device in a radio resource control RRC non-connected mode; and
receiving, in the RRC non-connected mode, the second multicast service provided by a second target cell, wherein the second target cell is one of second candidate cells.

19. The method according to claim 18, wherein before the receiving, in the RRC non-connected mode, the second multicast service provided by a second target cell, the method further comprises:
selecting the second target cell when performing cell selection based on the second candidate cell; and
camping on the second target cell.

20. The method according to claim 18 or 19, wherein the second multicast service comprises some or all services in a first multicast service, and the first multicast service is a to-be-handed-over service received by a first terminal device in the source access network device.

21. The method according to claim 20, wherein the second target cell satisfies at least one of the following:
the second target cell is a cell that is in the second candidate cell and that provides all services in the first multicast service for the terminal device in the RRC non-connected mode;
the second target cell is a cell that is in the second candidate cell and that provides a largest quantity of services in the first multicast service for the terminal device in the RRC non-connected mode;
the second target cell is a cell that is in the second candidate cell and that provides a third multicast service for the terminal device in the RRC non-connected mode, wherein the third multicast service is a service with a highest priority in the first multicast service; or
the second target cell is a cell that is in the second candidate cell and that provides a largest quantity of third multicast services for the terminal device in the RRC non-connected mode.

22. A communication apparatus, wherein the communication apparatus comprises a transceiver module, wherein
the transceiver module is configured to receive a first message, wherein the first message is for requesting to hand over a first multicast service of a first terminal device to a first target cell; and
the transceiver module is further configured to send a second message, wherein the second message is a response message of the first message, the second message comprises first information, the first information indicates a first candidate cell, and the first candidate cell is a cell that provides a multicast service for a terminal device in a radio resource control RRC non-connected mode.

23. A communication apparatus, wherein the communication apparatus comprises a transceiver module, wherein
the transceiver module is configured to send a first message, wherein the first message is for requesting to hand over a first multicast service of a first terminal device to a first target cell;
the transceiver module is further configured to receive a second message, wherein the second message is a response message of the first message, the second message comprises first information, the first information indicates a first candidate cell, and the first candidate cell is a cell that provides a multicast service for a terminal device in a radio resource control RRC non-connected mode; and
the transceiver module is further configured to send third information to the first terminal device, wherein the third information indicates a second candidate cell, the second candidate cell is a cell that provides a second multicast service for the terminal device in the radio resource control RRC non-connected mode, and the second multicast service comprises some or all services in the first multicast service.

24. A communication apparatus, wherein the communication apparatus comprises a transceiver module, wherein
the transceiver module is configured to receive third information from a source access network device, wherein the third information indicates a second candidate cell, and the second candidate cell is a cell that provides a second multicast service for a terminal device in a radio resource control RRC non-connected mode; and
the transceiver module is further configured to receive, in the RRC non-connected mode, the second multicast service provided by a second target cell, wherein the second target cell is one of second candidate cells.

25. A communication apparatus, wherein the communication apparatus comprises a processor, and the processor is configured to run a computer program or instructions, to enable the communication apparatus to perform the method according to any one of claims 1 to 11.

26. A communication apparatus, wherein the communication apparatus comprises a processor, and the processor is configured to run a computer program or instructions, to enable the communication apparatus to perform the method according to any one of claims 12 to 17.

27. A communication apparatus, wherein the communication apparatus comprises a processor, and the processor is configured to run a computer program or instructions, to enable the communication apparatus to perform the method according to any one of claims 18 to 21.

28. A computer-readable storage medium, wherein the computer-readable storage medium stores computer instructions or a program, and when the computer instructions or the program is run on a computer, the method according to any one of claims 1 to 11 is performed.

29. A computer-readable storage medium, wherein the computer-readable storage medium stores computer instructions or a program, and when the computer instructions or the program is run on a computer, the method according to any one of claims 12 to 17 is performed.

30. A computer-readable storage medium, wherein the computer-readable storage medium stores computer instructions or a program, and when the computer instructions or the program is run on a computer, the method according to any one of claims 18 to 21 is performed.
